# EUROPEAN PATENT SPECIFICATION

(11) **EP 4 550 103 B1**
(45) Date of publication and mention of the grant of the patent: **02.09.2026**
(21) Application number: 24179336.3
(22) Date of filing: 31.05.2024
(51) Int. Cl.: G06F 3/048, G06F 9/451, G06F 16/9032, G06N 20/00, G06N 3/10, G06F 16/3329

(54) **PARALLEL INTERACTION INTERFACE FOR MACHINE LEARNING MODELS**
PARALLELINTERAKTIONSSCHNITTSTELLE FÜR MASCHINENLERNMODELLE
INTERFACE D'INTERACTION PARALLÈLE POUR MODÈLES D'APPRENTISSAGE AUTOMATIQUE

(30) Priority: 02.06.2023 US 202318205431
(43) Date of publication of application: 07.05.2025
(73) Proprietor: BOLD Limited, Hamilton, Bermuda HM09 (BM)
(72) Inventor: NORDFORS, David, HM 09 Hamilton (BM)
(74) Representative: Abel & Imray LLP

(56) References cited:
- MD MAHADI HASSAN ET AL: "ChatGPT as your Personal Data Scientist", ARXIV.ORG, CORNELL UNIVERSITY LIBRARY, 201 OLIN LIBRARY CORNELL UNIVERSITY ITHACA, NY 14853, 23 May 2023 (2023-05-23), XP091515688

## Description

### CROSS-REFERENCE TO RELATED APPLICATION

This Application claims priority to U.S. Patent Application No. 18/205,431, filed on 2 June 2023.

### INTRODUCTION

### Technical Field

The present specification relates to systems and methods for a parallel interaction interface for machine learning models.

### Background

The emergence of machine learning (ML) models, such as large language models (LLMs), has created myriad new and useful tools for creating content. However, machine learning models generally have a very structured, limited, and linear interface and workflow-and one that is often not easily navigated by non-technical individuals. Because many types of content creation involve working with multiple documents at once (such as generating a resume and a related cover letter for a job application), and because those documents may be simultaneously in the making with their ML models and take part in shaping each other (as when working with budgets), existing ML model interfaces are insufficient. Therefore, there is a need in the art for improved user interfaces for interacting with machine learning models.

MD Mahadi Hassan et al authored an article entitled "ChatGPT as your Personal Data Scientist", published in Arxiv.org, Cornell University Library, 201 Olin Library Cornell University Ithaca, NY 14853, 23 May 2023.

### BRIEF SUMMARY

In one embodiment, a method for parallel interaction with machine learning models is disclosed. The method includes receiving first data in a first machine learning (ML) model interface window of a parallel interaction user interface, wherein the first ML model interface window is associated with a first identifier and the parallel interaction user interface comprises the first ML model interface window and a second ML model interface window, the first ML model interface window and the second ML model interface window each being configured to initiate a chat thread with one or more respective ML models; receiving, within a prompt entry field in the second ML model interface window, second data from a user, wherein the second data includes the first identifier; responsive to a presence of the first identifier, generating a first ML model prompt based on processing of a plurality of parallel inputs comprising the first data and the second data; providing, to a first ML model, the first ML model prompt; receiving, from the first ML model, a first model response; and displaying the first model response in the second ML model interface window.

In another embodiment, a parallel interaction user interface system is disclosed. The system includes a computing device comprising at least one processor and at least one non-transitory computer-readable medium storing computer readable instructions that, when executed by the at least one processor, cause the computing device to: receive, first data in a first machine learning (ML) model interface window of a parallel interaction user interface, wherein the first ML model interface window is associated with a first identifier and the parallel interaction user interface comprises the first ML model interface window and a second ML model interface window, the first ML model interface window and the second ML model interface window each being configured to initiate a chat thread with one or more respective ML models; receive, within a prompt entry field in the second ML model interface window, second data from a user, wherein the second data includes the first identifier; responsive to a presence of the first identifier, generate a first ML model prompt based on processing of a plurality of parallel inputs comprising the first data and the second data; provide, to a first ML model, the first ML model prompt; receive, from the first ML model, a first model response; and display the first model response in the second ML model interface window.

In another embodiment, a non-transitory computer-readable medium comprising instructions that, when executed by at least one processor, cause the at least one processor to perform operations is provided, the operations comprising: receiving first data in a first machine learning (ML) model interface window of a parallel interaction user interface, wherein the first ML model interface window is associated with a first identifier and the parallel interaction user interface comprises the first ML model interface window and a second ML model interface window (107), the first ML model interface window and the second ML model interface window each being configured to initiate a chat thread with one or more respective ML models; receiving, within a prompt entry field in the second ML model interface window, second data from a user, wherein the second data includes the first identifier; responsive to a presence of the first identifier, generating a first ML model prompt based on processing of a plurality of parallel inputs comprising the first data and the second data; providing, to a first ML model the first ML model prompt; receiving, from the first ML model, a first model response; and displaying the first model response in the second ML model interface window.

These and additional features provided by the embodiments described herein will be more fully understood in view of the following detailed description in conjunction with the drawings.

### DESCRIPTION OF THE DRAWINGS

The embodiments set forth in the drawings are illustrative and exemplary in nature and are not intended to limit the subject matter defined by the claims. The following detailed description of the illustrative embodiments can be understood when read in conjunction with the following drawings, where like structure is indicated with like reference numerals and in which:
**FIG. 1** illustrates an example environment in which the systems and methods of the present disclosure may be used according to one or more embodiments shown and described herein.
**FIG. 2** illustrates an example call flow of a client device, a computing device, and a machine learning model according to one or more embodiments shown and described herein.

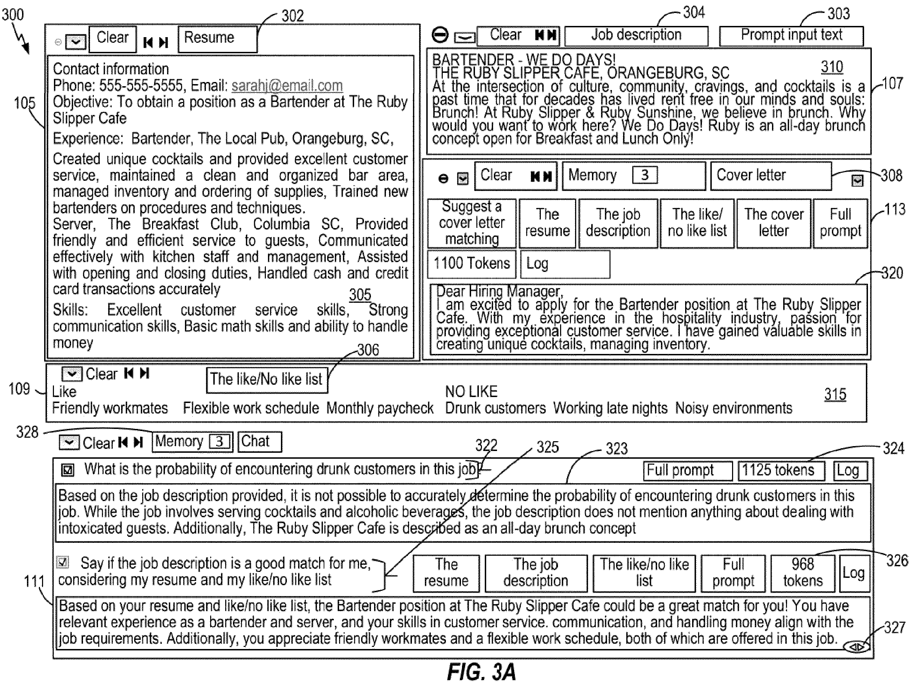

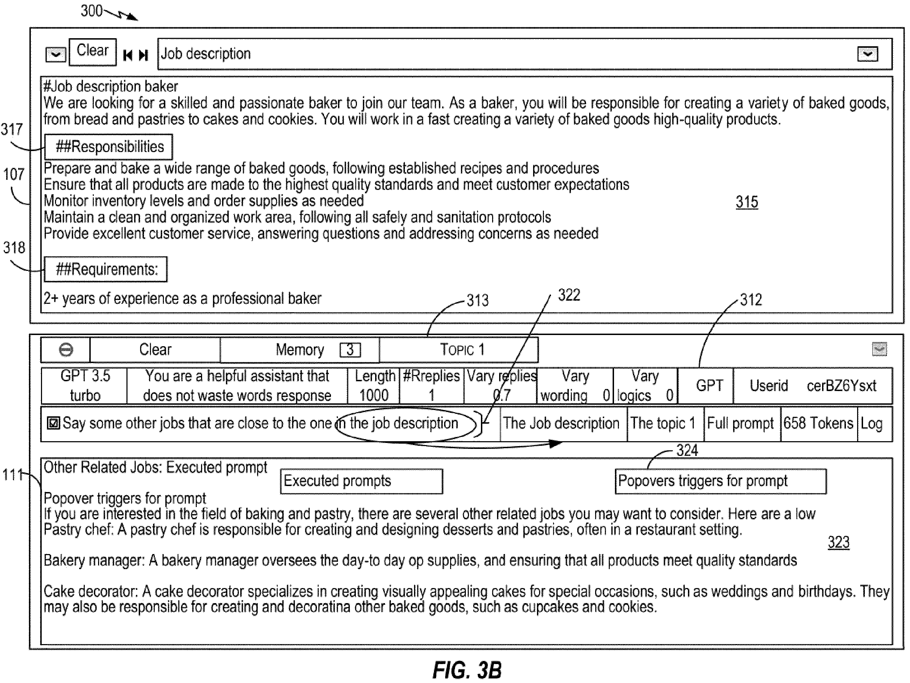

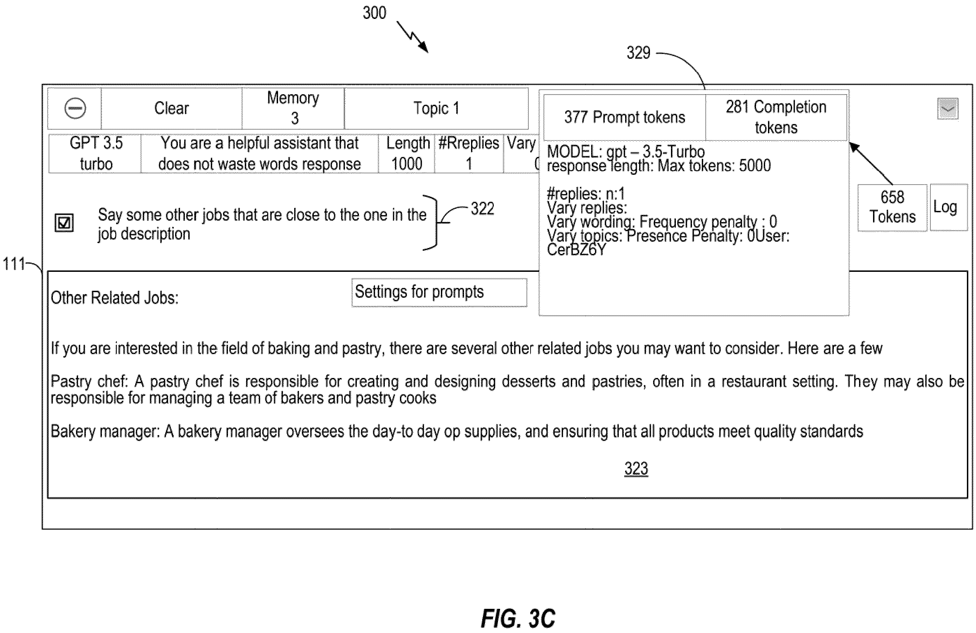

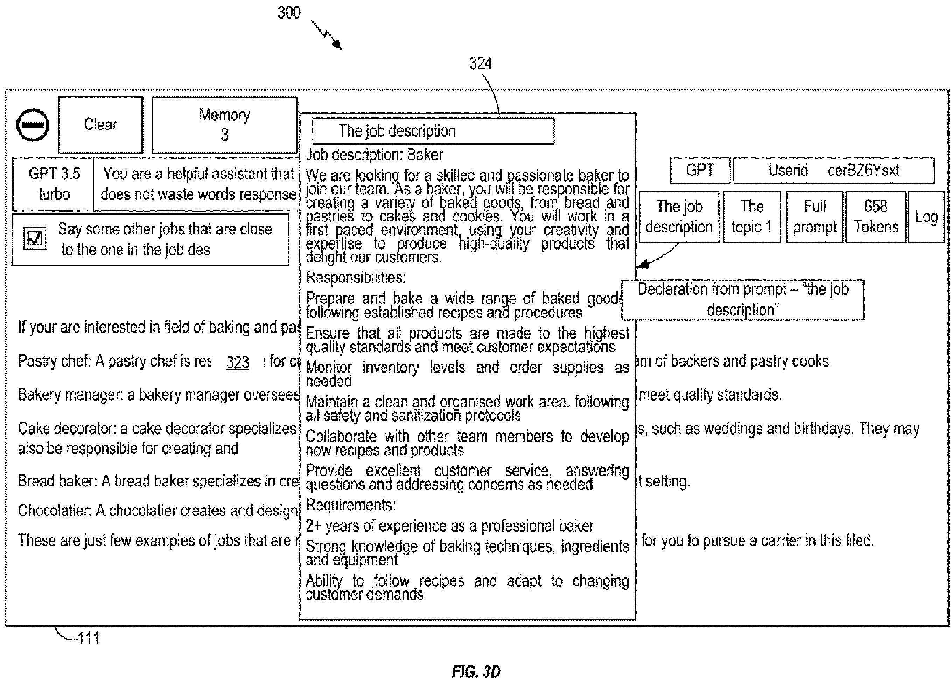

**FIG. 3A** depicts an example screen for a parallel interaction user interface, as well as constituent components according to one or more embodiments shown and described herein. **FIG. 3B** depicts an example screen for a parallel interaction user interface, as well as constituent components according to one or more embodiments shown and described herein. **FIG. 3C** depicts an example screen for a parallel interaction user interface, as well as constituent components according to one or more embodiments shown and described herein. **FIG. 3D** depicts an example screen for a parallel interaction user interface, as well as constituent components according to one or more embodiments shown and described herein.
**FIG. 4A** depicts an example screen for input of data within a prompt entry field of a machine learning model interface window of the parallel interaction user interface according to one or more embodiments shown and described herein. **FIG. 4B** depicts an example screen for input of data within a prompt entry field of a machine learning model interface window of the parallel interaction user interface according to one or more embodiments shown and described herein.
**FIG. 5A** depicts an example screen for loading saved prompt fields according to one or more embodiments shown and described herein. **FIG. 5B** depicts an example screen for loading saved prompt fields according to one or more embodiments shown and described herein.
**FIG. 6** depicts an example screen for editing saved user prompt entries according to one or more embodiments shown and described herein.
**FIG. 7** depicts an example screen for switching between a text mode and a chat mode of a machine learning model interface window of a parallel interaction user interface according to one or more embodiments shown and described herein.
**FIG. 8** depicts an example flowchart of a method for parallel interaction with machine learning models according to one or more embodiments shown and described herein.
**FIG. 9** depicts an example flowchart of a method for creating a document using parallel interaction with machine learning models according to one or more embodiments shown and described herein.
**FIG. 10** schematically depicts an example processing system according to one or more embodiments shown and described herein.

### DETAILED DESCRIPTION

Embodiments disclosed herein relate to parallel interaction interfaces for machine learning (ML) models that overcome technical limitations in conventional machine learning model interfaces.

ML models, such as large language models (LLMs) like generative pre-trained transformers (GPTs), are proving useful for myriad tasks. For example, GPTs may be used for conducting research, analyzing data, and creating content (e.g., documents), to name just a few things. But interactions with conventional ML models are limited and linear in nature, making it difficult or impossible to perform important tasks. For example, user interfaces for interacting with LLMs such as a chatbot are usually configured to receive a textual prompt in a single input window and to deliver a response to that prompt resulting in a linear thread of back-and-forth prompts and responses. These user interfaces are incapable of processing multiple parallel inputs and supporting interactions between those inputs to form a resulting model prompt. In such cases, the interface is generally much less capable than the underlying ML model. Moreover, more advanced interaction with ML models requires extensive knowledge of programming, command line interfaces, and the like; that is to say, they are not suited to the non-technical user. Thus, a technical problem arises in that existing interfaces do not allow for any sort of user to utilize the full range of capabilities of powerful ML models.

Consider a scenario in which a user wishes to write a resume and cover letter to submit to an online job posting. A conventional LLM interface may allow for generating a cover letter based on a textual prompt, such as "write me a cover letter for a bartender job," but the same interface would not allow a user to generate the cover letter based on multiple reference inputs, such as different collections of content maintained and edited in different user interface elements (e.g., different windows). Examples of such additional reference inputs could include a list of preferences, a job description, a resume, and other documents relevant to the task at hand. Moreover, the same interface would not allow for interfacing with multiple ML models at once to perform the single cover letter creation task. Embodiments described herein overcome these technical limitations and offer a "parallel" interface for interacting simultaneously with one or more referenceable inputs as well as one or more ML models to consider those inputs, and in particular for creating ML model prompts referencing multiple inputs maintained in independently manageable UI elements (e.g., windows). Returning to the example scenario above, a user of embodiments described herein may create (or import) a resume in a first window and create a list of notable qualifications in a second window and generate an ML model prompt with reference to the content in each window in yet another window in order to generate a cover letter. Beneficially, embodiments described herein enable creating any number of independently editable input windows that are referenceable in an ML model prompt.

Embodiments described herein further enable storing, retrieving, and editing model prompts along with related metadata. For example, a library of model prompts and related metadata may be accessed from any window in a parallel interaction interface. Consequently, users are enabled to easily and efficiently design, comment, save, publish, and retrieve ML model prompts as individuals and collectively. This beneficially allows for federated prompt engineering among users of the parallel interaction interface.

Further, unlike conventional prompt systems or those that require users to possess technical skill and know-how to interact with an ML model, embodiments described herein beneficially allow non-technical users to perform complex interactions with ML models. This improves the user interaction experience, including usability and navigability, visualization, user-friendliness, and efficiency.

Furthermore, embodiments described herein may be configured to perform significant processing in a browser (e.g., using JavaScript^{®}), which reduces latency, network traffic, and reliance on remote (e.g., cloud-based) computing resources compared to conventional systems. For example, parallel interaction interface embodiments described herein may process all input window creation, interaction, and prompt generation locally (e.g., in a browser) and leave only the processing of the prompt itself by the ML model to a remote computing device. In this manner, processing loads and latency for servers hosting ML models are beneficially reduced.

Additional advantages and improvements to at least the field of machine learning will be understood by the present disclosure.

### Example Environment for Parallel Interaction with Machine Learning Models

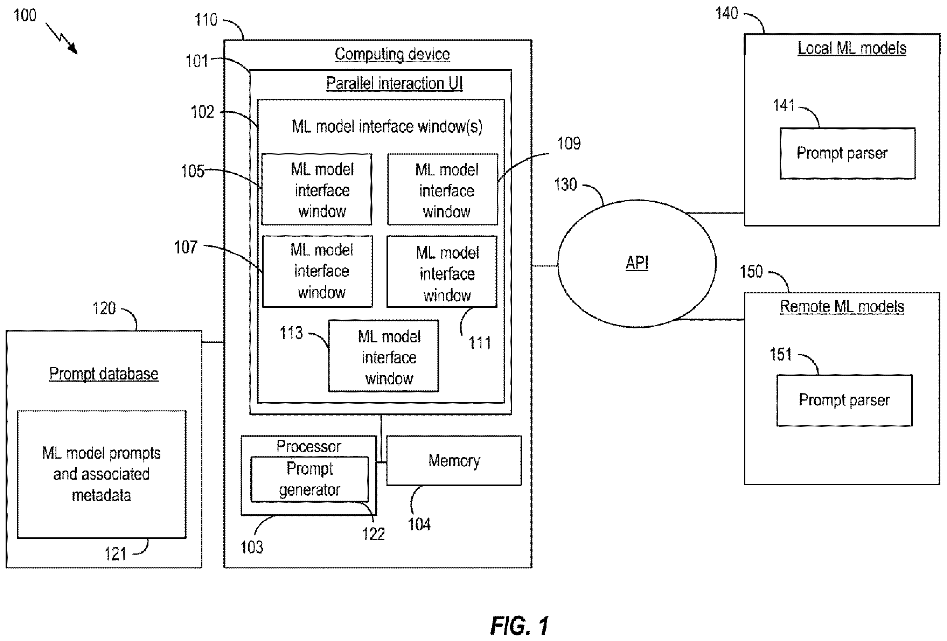

**FIG. 1** illustrates an exemplary environment 100 in which the systems and methods of the present disclosure may be deployed according to one or more embodiments. As illustrated, the environment 100 may include a computing device 110, a prompt database 120, an application programming interface 130, a local ML model 140, and a remote ML model 150. Although single instances of the constituent components of environment 100 are depicted, any number of the constituent components of environment 100 may be included.

A computing device 110 (e.g., a personal computer, a tablet computer, a cellular telephone, a smartphone or other smart device, a stateless device, or the like), may be used by a user to interact with the prompt database 120, application programming interface 130, local ML model 140, and remote ML model 150. The computing device 110 may include a display device for implementing a user interface, such as parallel interaction user interface 101, one or more processors 103 for executing logic, and one or more memories 104 mediums for storing information and/or computer readable instructions. Without limitation, the one or more memories 104 may include any number of non-transitory computer-readable mediums. In some examples, the computing device 110 may include a processor 103. In other examples, the computing device 110 may include two or more processors 103. Without limitation, the one or more processors 103 may refer to a single processor or two or more processors. In some examples, the computing device 110 may include a memory 104. In other examples, the computing device 110 may include two or more memories 104. Without limitation, the one or more memories 104 may refer to a single memory or two or more memories.

The parallel interaction user interface 101 may include a plurality of ML model interface windows 102. Each of the plurality of ML model interface windows 102 may be configured to receive data that is being generated in a given ML model interface window that is selected from the plurality of ML model interface windows 102, for example, either directly (by typing in) or indirectly (e.g., by importing) into the given ML model interface window. Based on the received data, the one or more processors 103 may be configured to generate one or more ML model prompts 121. For example, a prompt generator 122 is configured to generate the one or more ML model prompts 121. The prompt generator 122 is connected to the parallel interaction user interface 101. The prompt generator 122 is configured to receive data entered into the parallel interaction user interface 101, process the data received from the parallel interaction user interface 101 into the one or more ML model prompts 121, and transmit the one or more ML model prompts 121 to the one or more prompt parsers 141, 151 of the one or more ML models 140, 150 via the application programming interface 130. In some examples, the prompt generator 122 may include a single prompt generator. In other examples, the prompt generator 122 may include two or more prompt generators, which are configured to respectively process data received from the parallel interaction user interface 101, and then either collectively generate one or more ML model prompts 121 before transmitting it to the one or more prompt parsers 141, 151 of the one or more ML models 140, 150 via the application programming interface 130, or individually generate one or more ML model prompts 121 before transmitting a respective ML model prompt to the one or more prompt parsers 141, 151 of the one or more ML models 140, 150 via the application programming interface 130. In some examples, the one or more processors 103 may be configured to save the one or more ML model prompts 121 to the prompt database 120.

The prompt database 120 may be configured to save the one or more ML model prompts 121. For example, the one or more processors 103 may be configured to, upon receiving an indication to save an ML model prompt, save the first ML model prompt to the prompt database 120. In addition, the prompt database 120 may be configured to save metadata in association with the one or more ML model prompts 121, such as the first ML model prompt. In some examples, the text contained in the one or more ML model prompts 121, in addition to the one or more ML model prompts 121 itself, may be saved to the prompt database 120. By way of example, an ML model prompt of "suggest vacation destinations based on my requirements" may have the entire prompt saved to the prompt database 120, as well as the text contained within this prompt. In some examples, the prompt database 120 is local or remote relative to the computing device 110. Without limitation, the prompt database 120 may comprise a Solr database in the cloud that is accessed via the application programming interface 130. By way of example, the one or more ML model prompts 121 may be uploaded to the prompt database 120, downloaded from the prompt database 120, or any combination thereof.

The parallel interaction user interface 101 may be configured to communicate with one or more ML models 140, 150 via an application programming interface 130. For example, the one or more ML models 140, 150 may include local ML models 140 and remote ML models 150. The parallel interaction user interface 101 may be configured to provide the one or more ML model prompts 121, such as the first ML model prompt, to the one or more ML models 140, 150. In this manner, the one or more ML model prompts 121 may be locally processed or remotely processed. In some examples, any of the one or more ML model prompts 121 and/or associated metadata (saved or unsaved into the prompt database 120) may be used as-is (e.g., unedited) by the user before being provided to the one or more ML models 140, 150. In other examples, any of the one or more ML model prompts 121 and/or associated metadata (saved or unsaved into the prompt database 120) may be edited by the user before being provided to the one or more ML models 140, 150. In still other examples, at least one of the one or more ML model prompts 121 and/or associated metadata may be unedited by the user, and at least one of the one or more ML model prompts 121 and/or associated metadata may be edited by the user before being provided to the one or more ML models 140, 150.

The one or more ML models 140, 150 may generally comprise any type of ML model, such as a large language model (LLM). Examples of LLMs include a generative pre-trained transformer (GPT), bidirectional encoder representations from transformers (BERT), XLNet, GPT-2, GPT-3, GPT-4, GPT-Neo, GPT-NeoX, GPT-J, Megatron-Turing NLG, Ernie 3.0 Titan, Claude, GLaM, Gopher, LaMDA, Chincilla, PaLM, YaLM 100B, Minerva, BLOOM, Galactica, LLaMA, Cerebras-GPT, Falcon, BloombergGPT, PanGu-Σ, OpenAssistant, PaLM 2, and others. The one or more ML models 140, 150 may be configured to receive the one or more ML model prompts. In response to receipt of the one or more ML model prompts 121, the one or more ML models 140, 150 may be configured to generate, via respective one or more prompt parsers 141, 151 that is configured to parse the received one or more ML model prompts 121, and transmit one or more responses, such as a first model response. The plurality of ML model interface windows 102 may be configured to receive and display the first model response from the one or more ML models 140, 150.

Different ML models 140, 150 may be used interchangeably, and any of ML models 140, 150 may be connected to different ones of the plurality of ML model interface windows 102, to perform a task. Examples of tasks that may be performed at least partially using ML models 140, 150 include various types of scoring; bioinformatics; cheminformatics; software engineering; fraud detection; customer segmentation; generating online recommendations; adaptive websites; determining customer lifetime value; search engines; placing advertisements in real time or near real time; classifying DNA sequences; affective computing; performing natural language processing and understanding; generating a variety of types multimedia, sounds, graphics, images, or any combination thereof; object recognition and computer vision; robotic locomotion; playing games; optimization and metaheuristics; detecting network intrusions; medical diagnosis and monitoring; or predicting when an asset, such as a machine, will need maintenance.

The ML models 140, 150 may be constructed through an at least partially automated (e.g., with little or no human involvement) process called training. During training, input data may be iteratively supplied to a machine-learning model to enable the ML models 140, 150 to identify patterns related to the input data or to identify relationships between the input data and output data. With training, the ML models 140, 150 may be transformed from an untrained state to a trained state. Input data may be split into one or more training sets and one or more validation sets, and the training process may be repeated multiple times. The splitting may follow a k-fold cross-validation rule, a leave-one-out-rule, a leave-p-out rule, or a holdout rule.

### Call Flow for Parallel Interaction User Interface

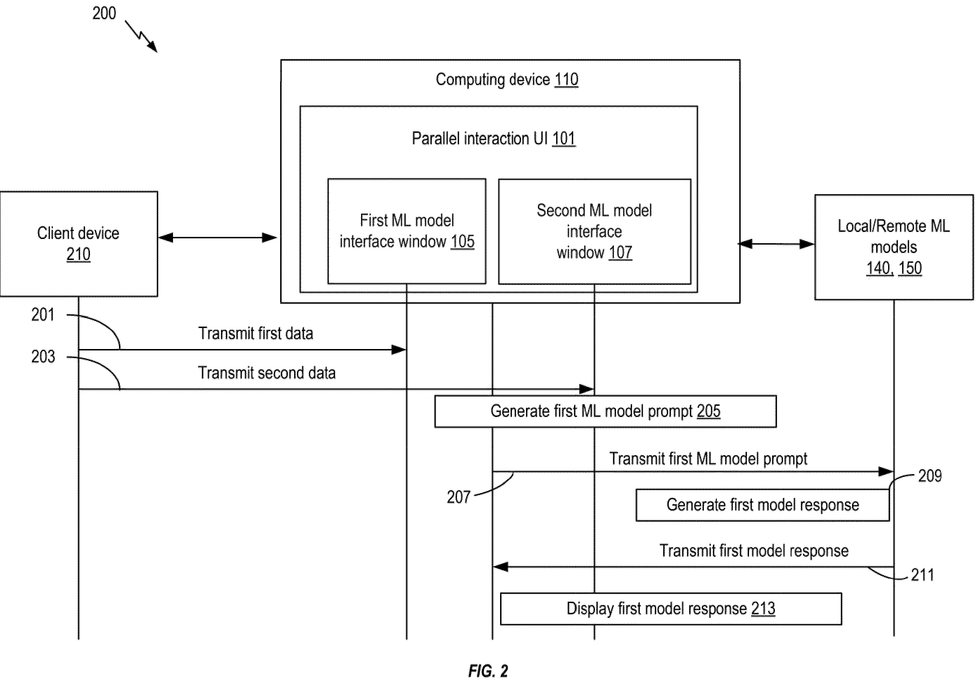

**FIG. 2** illustrates an example call flow 200 between a client device, a computing device, and an ML model, according to one or more embodiments shown and described herein. As illustrated, the call flow 200 includes a client device 210, a computing device 110, and one or more ML models 140, 150. Although single instances of components of the call flow 200 are depicted, any number of the constituent components of call flow 200 may be included.

The client device 210 may include one or more processors, and one or more memories, such as any number of non-transitory computer-readable mediums, for storing information and/or computer readable instructions. The client device 210 may include a web browser and be configured to connect to the computing device 110 via one more networks, such as the Internet. The computing device 110 may refer to the computing device as previously explained with respect to **FIG. 1****.**

After establishing a connection with the computing device 110, at step 201 the client device 210 transmits the first data, via the web browser, to a first ML model interface window 105 of a parallel interaction user interface 101. The first ML model interface window 105 may be one of the plurality of ML model interface windows 102 as previously explained with respect to **FIG. 1****.** At step 203, the client device 210 transmits additional data, such as second data, via the web browser, to a second ML model interface window 107 of the parallel interaction user interface 101.

Upon receipt of the first data and second data from the client device 210, at step 205 the computing device 110 generates one or more ML model prompts, such as a first ML model prompt. By way of example, the generation of the one or more ML model prompts is achieved by using data from separate ML model interface windows 102. For example, the one or more ML model prompts is generated by the referencing and/or sharing of respective content, just like first data, from a first ML model interface window and respective content, just like second data, from a second ML model interface window. The processing of multiple parallel inputs and supporting interactions between these inputs to generate the one or more ML model prompts enables complex prompts to be generated easily. In this manner, any number of independently editable input windows, such as any number of the plurality of ML model interface windows 102, may be created that are referenceable in a given ML model prompt.

At step 207, the computing device 110 transmits an ML model prompt to one or more ML models 140, 150. As previously explained with respect to FIG. 1, a prompt generator 122 of the computing device 110 is configured to generate one or more ML model prompts 121. The prompt generator 122 is connected to the parallel interaction user interface 101 of the computing device 110. The prompt generator 122 is configured to receive data entered into the parallel interaction user interface 101, process the data received from the parallel interaction user interface 101 into the one or more ML model prompts 121, and transmit the one or more ML model prompts 121 to the one or more prompt parsers 141, 151 of the one or more ML models 140, 150 via the application programming interface 130. In some examples, the prompt generator 122 may include a single prompt generator. In other examples, the prompt generator 122 may include two or more prompt generators, which are configured to respectively process data received from the parallel interaction user interface 101, and then either collectively generate one or more ML model prompts 121 before transmitting it to the one or more prompt parsers 141, 151 of the one or more ML models 140, 150 via the application programming interface 130, or individually generate one or more ML model prompts 121 before transmitting a respective ML model prompt to the one or more prompt parsers 141, 151 of the one or more ML models 140, 150 via the application programming interface 130. The one or more ML models 140, 150 may refer to the one or more ML models as previously explained with respect to **FIG. 1****.** As previously explained above, different ML models 140, 150 may be used interchangeably, and any of ML models 140, 150 may be connected to different ones of the plurality of ML model interface windows 102, to perform a task.

The one or more ML models 140, 150 are configured to receive the first ML model prompt from the computing device 110. At step 209, the one or more ML models 140, 150 generate one or more model responses. By way of example, the one or more prompt parsers 141, 151 of the one or more ML models 140, 150 are configured to analyze the one or more ML model prompts, such as the text contained therein to produce the one or more model responses.

At step 211, the one or more ML models 140, 150 transmit the one or more model responses to the computing device 110. At step 213, at least one of the plurality of ML model interface windows 102, such as the second ML model interface window 107, displays the one or more model responses.

### Sample Screen for Parallel Interaction User Interface

**FIG. 3A** depicts an example screen 300 for a parallel interaction user interface 101, as well as constituent components. As illustrated, the parallel interaction user interface 101 includes, by way of example, an ML model interface window 105, an ML model interface window 107, an ML model interface window 109, an ML model interface window 111, and an ML model interface window 113, which may generally correspond to the plurality of ML model interface windows 102 described with respect to **FIG. 1****.**

Each of the ML model interface windows may be associated with an identifier. For example, ML model interface window 105 is associated with an identifier 302, ML model interface window 107 is associated with an identifier 304, ML model interface window 109 is associated with an identifier 306, and ML model interface window 113 is associated with an identifier 308. In some examples, any number of the identifiers 302, 304, 306, and 308 may each include an identifier field. By way of example, the identifier 302 for ML model interface window 105 is "RESUME." The identifier 304 for ML model interface window 107 is "JOB DESCRIPTION." The identifier 306 for ML model interface window 109 is "LIKE/NO LIKE LIST." The identifier 308 for ML model interface window 113 is "COVER LETTER." It is understood that other identifiers may be used, and are not limited to as such.

The ML model interface window 105 with associated identifier 302 may include data 305 pertaining to a resume in this example. By way of example, the data 305 may include contact information, objective statement information, experience information, skills information, education information, and the like. In some examples, the data 305 may be uploaded from a file (e.g., as a Microsoft^{®} Word^{®} DOCX or Adobe^{®} Acrobat^{®} PDF file) by a user of client device 210. In other examples, the data 305 may be copy-paste from the file by a user of client device 210. In still other examples, the data 305 may be converted to text format, for example extracted from an image file, prior to being included in the ML model interface window 105. It is understood that the file type content provided into the ML model interface windows 102 is not limited to such files, and that other file types may be used, including Microsoft^{®} Excel^{®} XLSX or Microsoft^{®} PowerPoint^{®} PPTX, JPEG, PDF, MPEG. It is further understood that the file types may be generated, retrieved, provided, or otherwise utilized include, without limitation, by connecting to any number of AI systems, such as DALL-E, DALL-E 2, Midjourney, or any combination thereof.

The ML model interface window 107 with associated identifier 304 may include data 310 pertaining to a job description in this example. The ML model interface window 107 includes a prompt entry field 303 comprising a prompt input text field. The prompt entry field 303 is configured to receive at least one of the identifiers, such as the first identifier of the identifiers 302, and a trigger. For example, the trigger may include a word, such as "the" or "my." In some cases, the trigger may be configured to always precede the identifier. Upon determining that the trigger precedes the first identifier, the content referred to in the first identifier of the prompt entry field 303 is added. By way of example, upon determining the presence of "my" before "RESUME", the data 305 from the ML model interface window 105 is included with the prompt, for example, as part of a user-defined declaration. Upon determining the presence of "the" before "JOB DESCRIPTION," the data 310 from the ML model interface window 107 is included with the prompt, for example, as part of another user-defined declaration. In this manner, the prompt of the prompt entry field 303 references and incorporates different content, such as data 305 and data 310, from different ML model interface windows 105, 107 of the parallel interaction user interface 101.

In some examples, it is not necessary for a trigger to precede an identifier. By way of example, other identifiers that may be used include: "the resume," or "the job description," or "the cover letter" for any number of the ML model interface windows 102. In these examples, the identifier itself may already include a word, such as "the" or "my" or "a" or the like, without having to have a separate trigger to precede it. In this example, a declaration may include: "#This is my requirements," in which corresponding content for "my requirements" identifier (or "my" defining a trigger that precedes "requirements") for a given model interface window.

The ML model interface window 109 with associated identifier 306 may include data 315 pertaining to user likes and user dislikes. By way of example, the data 315 may include a list of user preferences that the user would like to be taken into consideration when applying for an online job submission. The data 315 may include work schedule preference information, salary preference information, job responsibilities preference information, work environment preference information, work location information, and the like. In addition to consideration of the data 305 pertaining to the resume from ML model interface window 105, the one or more ML models 140, 150 may also take into account data 315 pertaining to the user likes and user dislikes when processing the ML model prompt to produce a model response that is further tailored and accurate relative to user preferences.

The ML model interface window 111 may include one or more prompts 322, 325. As will be explained below, the one or more prompts 322, 325 are provided in a chat thread of a given ML model interface window, just like the ML model interface window 111. With further reference to **FIG. 3A****,** the chat thread of ML model interface window 111 is configured to investigate the matching of the content of job description (just like data 315) of ML model interface window 107 with respect to the content of the user likes and user dislikes (just like data 315) of ML model interface window 109, as explained below with respect to the one or more prompts, just like one or more prompts 322, 325.

As further discussed below, a drop down button of a header, such as header 412, is configured to switch between a text mode and a chat mode. The selection of the text mode is configured to enable editing of text and switching back and forth between previous contents of an ML model interface window. The selection of the chat mode is configured to initiate a chat thread in an ML model interface window and then dynamically interact with the user via input of one or more ML model prompts that reference content from respective ML model interface windows. In contrast to the chat mode, the text mode is capable of editing text. The arrow buttons are configured to toggle between previous contents of text in the text mode, but will not include preceding interactions in the ML model prompt. Note that these are some example modes, and others are possible, such as a table mode for editing tabular data, or such tabular data may be edited in the text mode. Another mode may be a graphic mode for importing image data. Yet another mode may be a structured data mode, such as for importing structured data types, like JSON files and the like. Notably, chat and text modes are described herein for simplicity and clarity, but any mode associated with a given data type may be defined, and in some cases, a single mode may be able to process and interact with multiple data types. In some cases, various modes may be enabled by installing and/or enabling associated plug-ins or extensions.

The corresponding model response, such as model response 323, is provided to one of the plurality of ML model interface windows 105, 107, 109, 111, 113 for display. The model response 323 includes a response to the ML model prompt, such as an assessment, an evaluation, a narrative, an analysis, or the like. The ML model interface window 111 further includes one or more popover triggers 324. The ML model interface window 111 further includes a ML model settings bar which comprises a character limiter response length that is set by the user and configured to restrict the character limit of the model response 323 before the model response 323 is provided by the one or more ML models 140, 150 and displayed by at least one of the plurality of ML model interface windows 105, 107, 109, 111, 113. In other examples, the character limiter is configured to restrict tokens and words of the model response 323 prior to providing the model response 323 to the one or more ML models 140, 150 and displayed by at least one of the plurality of ML model interface windows 105, 107, 109, 111, 113.

**FIG. 3B** depicts an example screen 300 for a parallel interaction user interface 101, as well as constituent components. As illustrated, the parallel interaction user interface 101 includes, by way of example, an ML model interface window 107, and an ML model interface window 111, which may generally correspond to the plurality of ML model interface windows 102 described with respect to **FIGs. 1** **and** **3A****.**

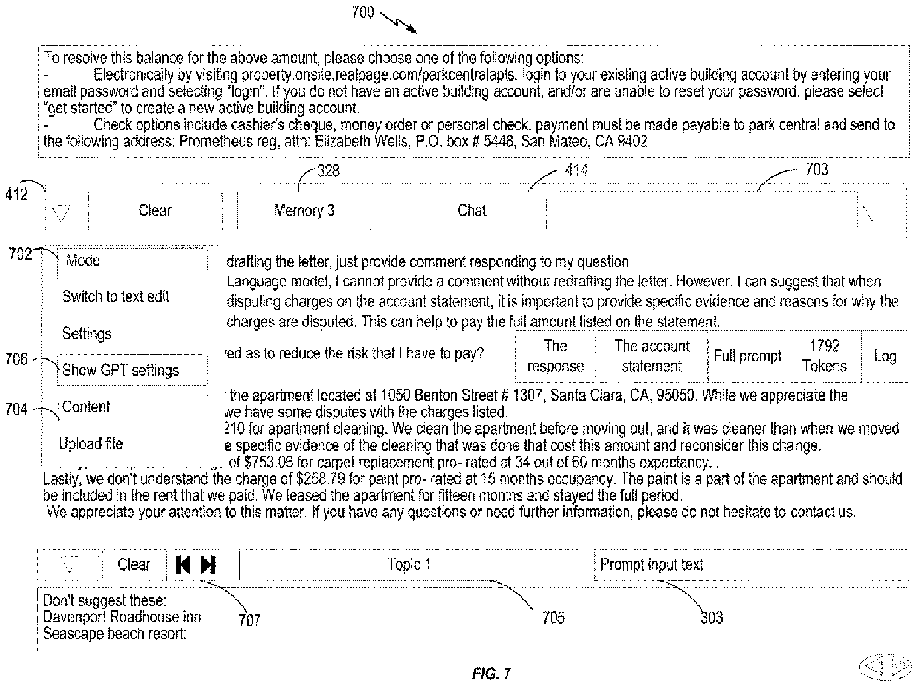

As illustrated, the ML model interface window 107 includes the data 315, as previously explained with reference to **FIG. 3A****,** and comprises job description data. The ML model interface window 111 includes the one or more prompts, such as one or more prompts 322, and a settings bar 312, which includes an identifier 313 ("TOPIC 1") and the one or more popover triggers 324. The settings bar 312 is opened, for example, by clicking "SHOW GPT SETTINGS" (referring to the ML model settings) from a dropdown menu, as depicted with reference to **FIG. 7****.** By way of example, the "response length: 1000" of the settings bar 312 refers to the character limiter response length, as previously explained above. In some examples, by moving or hovering a cursor over the one or more popover triggers 324, settings for the one or more prompts 322 and tokens used are displayed. In a chat mode (as further explained below), each one or more prompts 322 that is/are executed (such as "Say some other jobs that are close to the one in the job description") and model response 323 (such as "Other Related Jobs ... .") is accompanied by the one or more popover triggers 324, in which the settings of the settings bar 312 and declarations 317, 318 of ML model interface window 107 are displayed, as per **FIGs. 3C-3D****,** described below. By way of example, declaration 317 may refer to the "Responsibilities" of the job description, preceded by ##, and declaration 318 may refer to "Requirements" of the job description, preceded by ##.

**FIG. 3C** depicts an example screen 300 for a parallel interaction user interface 101, as well as constituent components. As illustrated, the parallel interaction user interface 101 includes, by way of example, an ML model interface window 111, which may generally correspond to the plurality of ML model interface windows 102 described with respect to **FIGs. 1** **and** **3A****-3B.** As illustrated in **FIG. 3C****,** the ML model settings 329 for the one or more prompts 322 that is/are executed along with the number of tokens used are displayed in the ML model interface window 111. A model response 323 is displayed in the ML model interface window 111.

**FIG. 3D** depicts an example screen 300 for a parallel interaction user interface 101, as well as constituent components. As illustrated, the parallel interaction user interface 101 includes, by way of example, an ML model interface window 111, which may generally correspond to the plurality of ML model interface windows 102 described with respect to **FIGs. 1** **and** **3A****-3C.** As illustrated in **FIG. 3D****,** one of the one or more popover triggers 324 depicts the historic version of the job description used in the one or more prompts 322 that is/are executed. By way of example, declaration from the one or more prompts 322 that is/are executed (here, from "the job description") is displayed as one of the one or more popover triggers 324 in the ML model interface window 111. A model response 323 is displayed in the ML model interface window 111.

Referring back to **FIG. 3A****,** the one or more prompts 322, 325 are input into the prompt entry field 303. By way of another example, prompt 325 includes "say if the job description is a good match for me, considering my resume and my like/no like list," and in this example, "the" may refer to the preceding trigger relative to "job description" of the ML model interface window 107, "my" may refer to the preceding trigger relative to "resume" of the ML model interface window 105, and "my" may refer to the preceding trigger relative to the "like/no like" list of the ML model interface window 109. The prompt 325 is configured to reference and incorporate the data 310, the data 305, and the data 315 of the respective ML model interface windows. Prompt 325 is sent to the one or more ML models 140, 150 for producing a corresponding model response that is responsive to the prompt 325. The corresponding model response, such as model response 327, is provided to one of the plurality of ML model interface windows 105, 107, 109, 111, 113 for display. Model response 327 includes a response to the ML model prompt, such as an assessment, an evaluation, a narrative, an analysis, or the like. The ML model interface window 111 further includes a second popover trigger 326. The ML model interface window 111 further includes a ML model settings bar which comprises a character limiter response length that is configured to restrict the character limit of the model response 327 before the model response 327 is provided by the one or more ML models 140, 150 and displayed by at least one of the plurality of ML model interface windows 105, 107, 109, 111, 113. In other examples, the character limiter is configured to restrict tokens and words of the model response 327 prior to providing the model response 327 to the one or more ML models 140, 150 and displayed by at least one of the plurality of ML model interface windows 105, 107, 109, 111, 113.

By another way of example, prompt 322 includes "What is the probability of encountering drunk customers in this job?" In this example, "this job" is not a declaration ("this" is not a trigger and "job" is not an existing identifier). However, the one or more ML models 140, 150 nevertheless knows that "this job" refers to the job description since the ML model interface window 111 is in "chat mode" with the chat memory length setting 328 set to include three previous interactions in the prompt, in this example including the preceding prompt 325 declaring "the job description" and the ML model response 327 responding thereupon.

In yet another example, a prompt includes "Generate a cover letter for the job description, considering my resume and my like/no like list," and in this example, "the" may refer to the preceding trigger relative to "job description" of the ML model interface window 107, "my" may refer to the preceding trigger relative to "resume" of the ML model interface window 105, and "my" may refer to the preceding trigger relative to the "like/no like" list of the ML model interface window 109. The prompt is configured to reference and incorporate the data 310, the data 305, and the data 315 of the respective ML model interface windows. The prompt is sent to the one or more ML models 140, 150 to produce a corresponding model response that is responsive to the prompt. The corresponding model response, such as model response 320, is provided to one of the plurality of ML model interface windows 105, 107, 109, 111, 113 for display. Model response 320 includes a response to the ML model prompt, such as the cover letter as requested by the prompt.

In some examples, the ML model interface window 111 further includes another ML model settings bar which comprises a third character limiter response length (not shown) that is configured to restrict the character limit of the model response 320 before the model response 320 is provided by the one or more ML models 140, 150 and displayed by at least one of the plurality of ML model interface windows 105, 107, 109, 111, 113. In other examples, the character limiter is configured to restrict tokens and words of the model response 327 prior to providing the model response 327 to the one or more ML models 140, 150 and displayed by at least one of the plurality of ML model interface windows 105, 107, 109, 111, 113.

In this example, the model response 320 includes a cover letter that is particularly generated via the parallel interaction user interface with the one or more ML models 140, 150, and also tailored towards the job description input as data 310 in view of the resume input as data 305 and user likes and user dislikes input as data 315. The model response 320 may be displayed in an ML model interface window 113 that is associated with an identifier 308, here "COVER LETTER".

Still further, the ML model interface window 111 further includes a chat memory length setting 328 that is set by the user according to a predetermined number and stored in memory 104. In this manner, the number of chats in the chat thread of the chat mode of the ML model interface window 111 are saved and include previous prompts and responses that appear above a current prompt. As previously explained, the ML model prompt is generated based on a configured number of previous interactions or the previous prompts with the one or more ML models 140, 150.

### Example Screen for Data Input within a Prompt Entry Field of an ML Model Interface Window of a Parallel Interaction User Interface

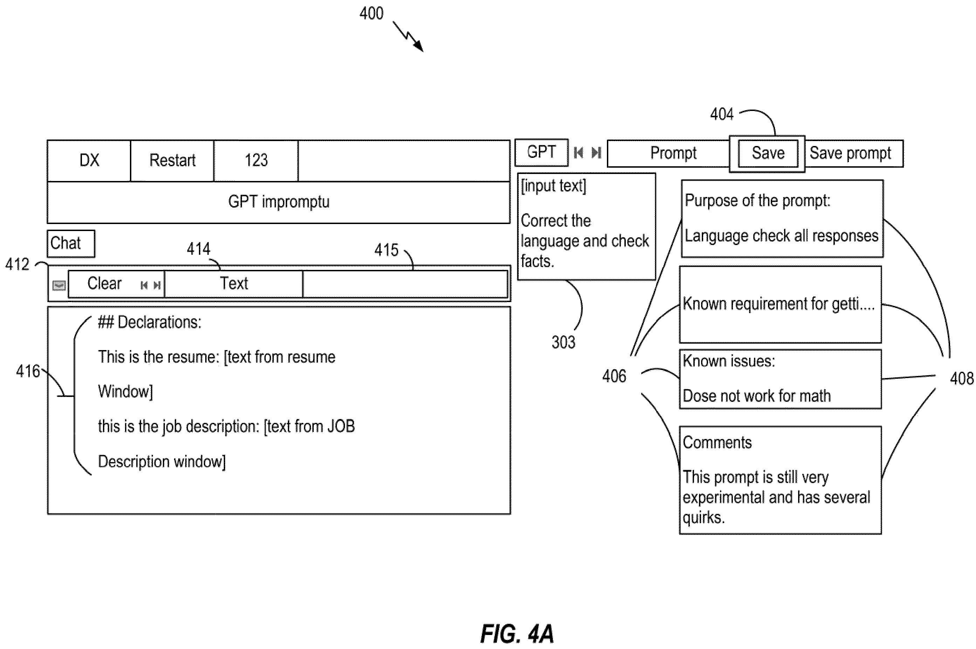

**FIG. 4A** depicts an example screen 400 for input of data within a prompt entry field of an ML model interface window of the parallel interaction user interface. As illustrated, the sample screen 400 includes a prompt entry field 303, a save ML model prompt button 404, a plurality of save prompt fields 406, and a plurality of user entries 408.

In some examples, the prompt entry field 303 is a placeholder for the content of the entry field 415, as described below. The entry field 415 comprises an input text field, in which text is inputted and thereafter inserted into prompt entry field 303. The entry field 415 is seen as a "quick launch". By way of example, the prompt entry field 303 refers to the entirety of "[input text] Correct the language and check facts," as at least partially inputted from entry field 415.

The prompt entry field 303 is configured to receive an identifier and a preceding trigger (though, as above, in other examples, a trigger may not be necessary). Below the prompt entry field 303, and responsive to a presence of the first identifier, an ML model prompt is generated that is sent to the one or more ML models 140, 150 for processing. The user may be presented with an option to save the ML model prompt. For example, the ML model prompt is saved into the prompt database 120 by a selection of the save ML model prompt button 404.

A plurality of prompt save prompt fields 406 are displayed in which respective user entries 408 may be inputted by the user. By way of example, the save prompt fields 406 include a purpose of the prompt, known requirements, known issues, comments, or any combination thereof. Generally, the purpose of the prompt may include an objective, a goal, and a function that is associated with the prompt. By way of example, a respective user entry 408 for the "purpose of the prompt" save prompt field 406 includes "Language check all responses." Generally, the known requirements may include requirements that are needed for processing the prompt, such as particular characters and/or particular identifiers and/or particular data formatting. By way of example, a respective user entry 408 for the "known requirements" save prompt field 406 includes content required to analyze the prompt. While the respective user entry 408 for the "known requirements" save prompt field 406 is indicated as empty or null, it is understood that none of the respective user entries 408 for the save prompt fields 406 are limited to as such. Generally, the known issues may include information that is known to cause faults, discrepancies, issues, abnormalities, and/or incompatibilities that are associated with the prompt. By way of example, a respective user entry 408 for the "known issues" save prompt field 406 includes "Does not work for math." Generally, the comments may include information that relates to updates, versions, narratives, notes, and the like that are associated with the prompt. By way of example, a respective user entry 408 for the "comments" save prompt field 406 includes "This prompt is still very experimental and has several quirks."

Each of the user entries 408 may be modified, deleted, updated, retrieved, or any combination thereof by the user. In some examples, the user entries 408 for each of the corresponding save prompt fields 406 may be collectively referred to as metadata that is associated with the ML model prompt, and denoted ML model prompts 121 as indicated above with respect to **FIG. 1****.** In this manner, individual users and groups of users may be able to better understand, appreciate, modify, update, delete, retrieve, comment on, and interactively share the metadata with other users and groups of users.

As illustrated, the screen 400 further includes a header 412, an identifier field 414, an entry field 415, and a plurality of declarations 416. In some examples, the ML model prompt is generated based on a configured number of previous interactions with the one or more ML models 140, 150.

The header 412 is in text mode and includes a display field for the identifier field 414, an entry field 415, a dropdown button [dropdown number], a clear button, and arrow buttons [arrows number]. The header 412 can be toggled to chat mode in the dropdown button menu 702. The entry field 415 comprises an input text field, in which text is inputted and thereafter inserted into prompt entry field 303. The display field for the identifier field 414 is editable and may be one of the options for changing the identifier for the ML model interface window. The dropdown button menu 702 is configured to switch between a text mode and a chat mode, uploading data content via content selection interface element 704, as well as other functions. The selection of the text mode may be configured to enable editing of text and switching back and forth between previous contents of an ML model interface window with the arrow buttons. The selection of the chat mode may be configured to initiate a chat thread in an ML model interface window and then dynamically interact with the user via input of one or more ML model prompts that reference content from respective ML model interface windows. The chat mode replaces the arrow buttons [arrows number] with a chat memory length setting 328 that is configured to determine a number of preceding interactions in the chat thread to be included in the ML model prompt. In contrast to the chat mode, the text mode is capable of editing text. The arrow buttons are configured to toggle between previous contents of text in the text mode, but will not include preceding interactions in the ML model prompt. Note that these are some example modes, and others are possible, such as a table mode for editing tabular data, or such tabular data may be edited in the text mode. Another mode may be a graphic mode for importing image data. Yet another mode may be a structured data mode, such as for importing structured data types, like JSON files and the like. Notably, chat and text modes are described herein for simplicity and clarity, but any mode associated with a given data type may be defined, and in some cases, a single mode may be able to process and interact with multiple data types. In some cases, various modes may be enabled by installing and/or enabling associated plug-ins or extensions.

The "clear" button is configured to clear the contents of an ML model interface window. The plurality of declarations 416 may refer to the declarations previously described above with respect to **FIGs. 3A-3D****.** By way of example, upon determining the presence of "my" or "the" before "RESUME" the data 305 from the ML model interface window 105 is included with the prompt, as part of a user-defined declaration. Upon determining the presence of "the" before "JOB DESCRIPTION," the data 310 may from the ML model interface window 107 is included with the prompt, as part of another user-defined declaration. In this manner, the prompt of the prompt entry field 303 may reference and incorporate respective content from respective ML model interface windows 105, 107 of the parallel interaction user interface 101.

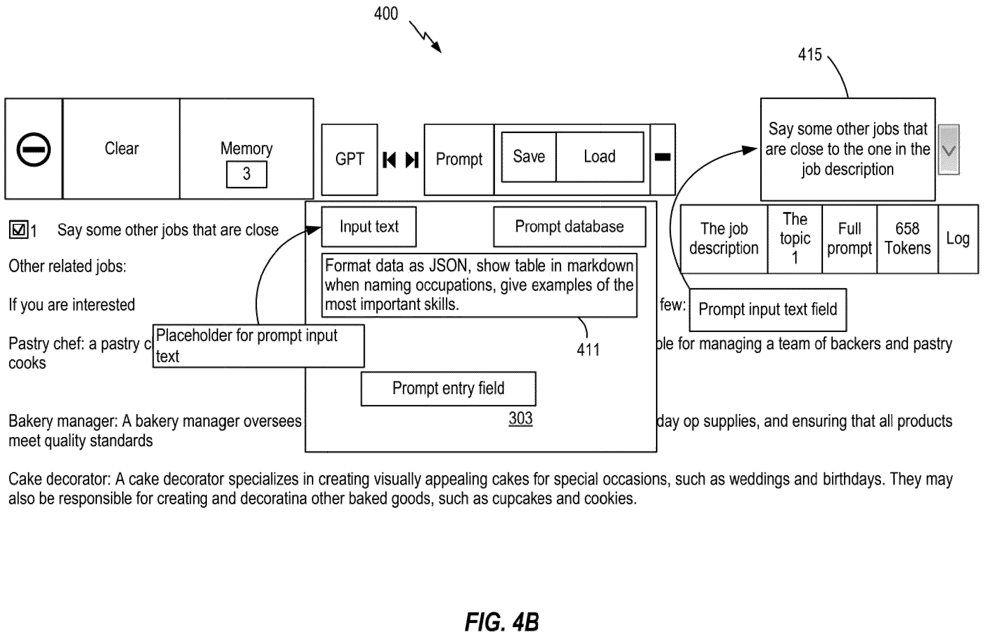

**FIG. 4B** depicts an example screen 400 for input of data within a prompt entry field of an ML model interface window of the parallel interaction user interface. As illustrated, the sample screen 400 includes a prompt entry field 303, a prompt template 411, and an entry field 415, for any given ML model interface window of the plurality of ML model interface windows 102. By way of example, a prompt template 411 includes instructions that are to be added to each prompt. These instructions of the prompt template 411 can include "format data as json" or "show tables in markdown" or be specific relative to respective content of a given ML model interface window (such as "when naming occupations, give examples of the most important skills" for a ML model interface window with an associated identifier "jobs research"), or any combination thereof.

### Example Screen for Loading Saved Prompt Fields

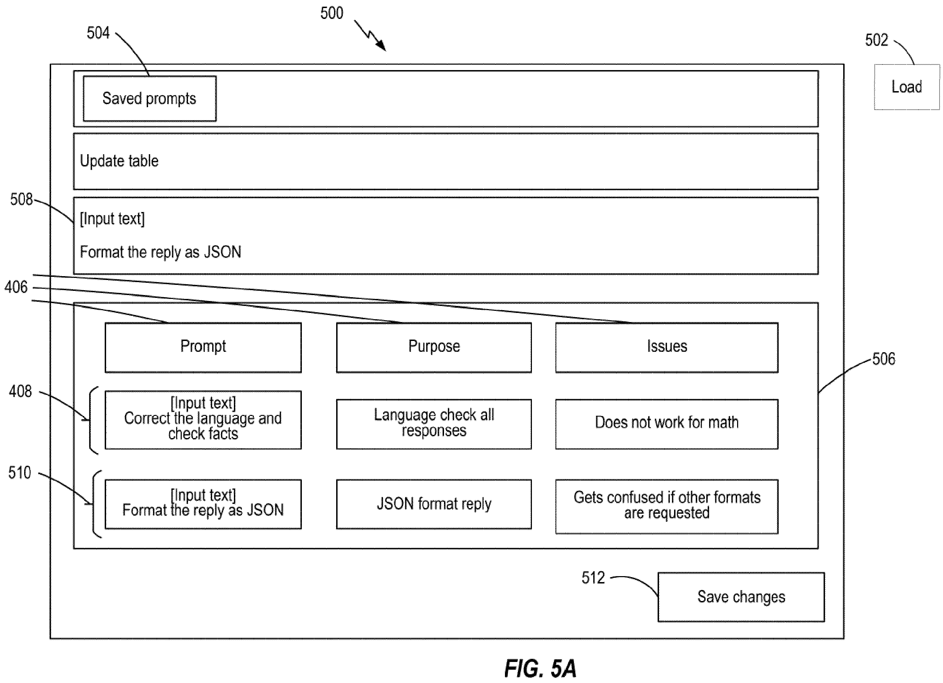

**FIG. 5A** depicts an example screen 500 for loading saved prompt fields, according to one or more embodiments shown and described herein. As illustrated, the screen 500 of a ML model interface window of the parallel interaction user interface 101 includes a load saved prompts button 502, an identifier for indicating saved prompts 504, a table 506, and an editable user entry 508.

The load saved prompts button 502 is configured to load saved prompts, for example, via the prompt database 120, for editing, adding, deleting, commenting, sharing, or any combination thereof. In addition, metadata associated with the ML model prompts 121 are retrieved from the prompt database 120 for editing, adding, deleting, commenting, sharing, or any combination thereof.

In some embodiments, the sharing of the saved ML model prompt and/or the sharing of the saved metadata associated with the saved ML model prompt is achieved through data communication established with one or more social media systems (not shown) for subsequent publishing, commenting, sharing, tagging, or the like. In some examples, the sharing of the saved ML model prompt and/or saved metadata associated with the saved ML model prompt may be restricted to certain users and/or certain groups that have requisite access to the one or more social media systems.

The table 506 includes saved prompt fields 406 with respective saved user entries 408, and an update 510. By way of example, a saved prompt field 406 includes "prompt," "purpose," and "issues." For the "prompt" saved prompt field 406, a saved user entry 408 includes a prompt entry field and an ML model prompt, such as prompt entry field 303 including "[input text] Correct the language and check facts," as previously explained with respect to **FIGs. 4A-4B****.**

Any of the saved user entries 408 of table 506 may be edited and saved, via a selection of a button 512, by the user. For example, the user may desire to include, as part of an update to the saved prompt, a user entry to the "prompt" saved prompt field 406. In this case, the user may select the "prompt" saved prompt field 406 and then update the ML model prompt to recite "Format the reply as JSON" which may be the editable user entry 508. This update 510 is recognized by the one or more ML models 140, 150, and configured to generate a model response in a particular file format type, here JSON, that is then sent to the ML model interface window for display.

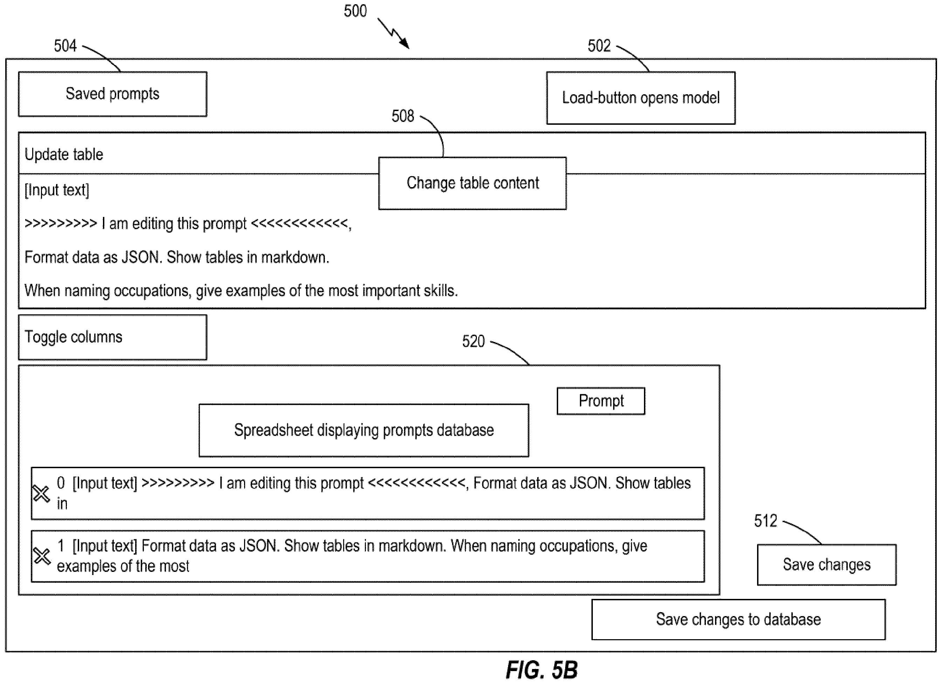

**FIG. 5B** depicts an example screen 500 for loading saved prompt fields, according to one or more embodiments shown and described herein. As illustrated, the screen 500 of a ML model interface window of the parallel interaction user interface 101 includes a load saved prompts button 502, an identifier for indicating saved prompts 504, a spreadsheet 520, and an editable user entry 508. The editable user entry 508 refers to one or more of the prompts contained within the spreadsheet 520. Without limitation, the one or more prompts contained in the spreadsheet 520 can be edited by the user, via editable user entry 508, in which case the one or more prompts may be retrieved, loaded, or otherwise accessible via prompt database 120. Any of the user entry(ies) 508 of spreadsheet 520 can be edited and saved, via a selection of a button 512, by the user, into the prompt database 120.

### Example Screen for Editing Saved User Prompt Entries

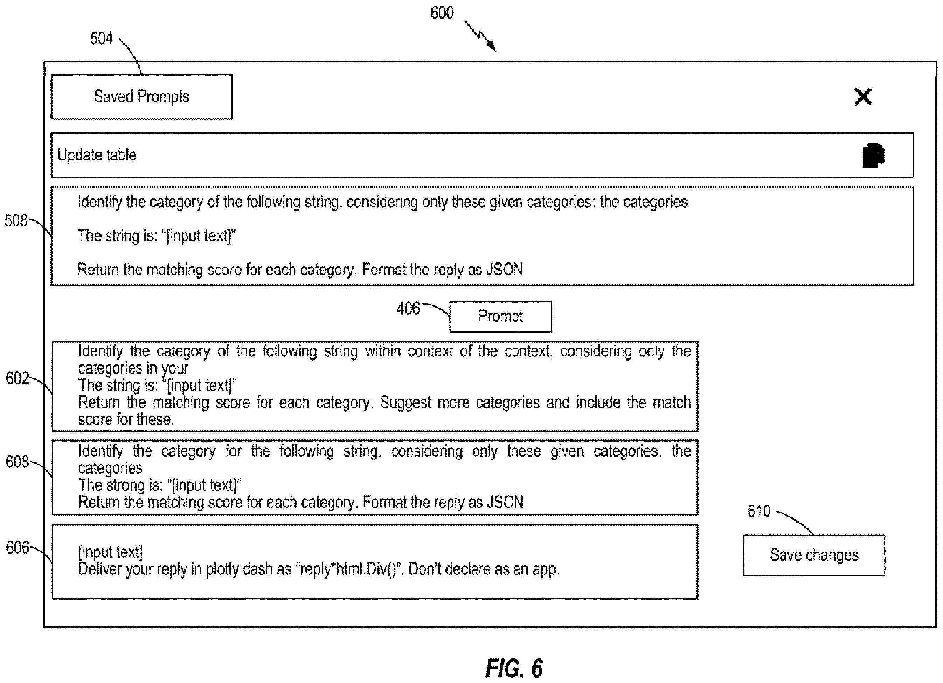

**FIG. 6** depicts an example screen 600 for editing saved user prompt entries, according to one or more embodiments shown and described herein. As illustrated, the screen 600 of an ML model interface window of the parallel interaction user interface 101 includes an identifier for indicating saved prompts 504, saved prompt field 406, a plurality of saved user prompt entries 602, 608, and 606, and an editable user entry 508 (which may include an updated user prompt entry).

Any of the saved user prompt entries 602, 608, and 606 may be edited and saved, via a selection of a button 610, by the user. For example, the user may desire to include a user prompt entry to the "prompt" saved prompt field 406. In this case, the user may select the "prompt" saved prompt field 406 and then edit the ML model prompt to recite "Identify the category of the following string written within the context of the context, considering only the categories in your ...." The string is "[input text]"... Return the matching score for each category. Format the reply as json" as an editable user entry 508. This update is recognized by the one or more ML models 140, 150, and configured to generate a model response in a particular file format type, here JSON, and in accordance with the ML model prompt instructions (such as the identification of categories, the return of a matching score for each category) that is then sent to the ML model interface window for display. It is understood that the file format type is not limited to JSON, and that other file format types may be used, such as XML, markdown, PADS markup language, IFTTT, routing policy language, Click router configuration language, and the like. Generally, the outputted model response may be directed into various types of unstructured and unstructured data types.

### Example Screen for Switching between a Text Mode and a Chat Mode of an ML Model Interface Window of the Parallel Interaction User Interface

**FIG. 7** depicts an example screen 700 for switching between a text mode and a chat mode of an ML model interface window of the parallel interaction user interface, according to one or more embodiments shown and described herein. As illustrated, the screen 700 of an ML model interface window of the parallel interaction user interface 101 includes a header 412, as it appears in a chat mode (as further explained below), an identifier field 414, an entry field 703, an identifier field 705, as it appears in a text mode (as further explained below), and a prompt entry field 303.

The header 412 includes a mode selection interface element, for example in a dropdown button menu 702, that is configured to enable switching between a text mode and a chat mode in a given ML model interface window. The header 412 includes an entry field, such as entry field 703 (including but not limited to entry field 415 as further depicted in **FIG. 4B****,** prompt entry field 303 as further depicted in **FIG. 3A**) that comprises an input text field, in which text is inputted and thereafter inserted into prompt entry field 303, as further depicted in **FIG. 7****.** The header 412 also includes a content selection interface element 704, such as a button, that is configured to enable importing and/or viewing of content inside the given ML model interface window. It is understood that each of the ML model interface windows 102 of the parallel interaction user interface 101 may include an identifier field 414, such as for identifiers 302, 304, 306, 308, for entering an identifier field 414 for the respective ML model interface window 102, a prompt entry field 303, a header 412, a dropdown button menu 702, or any combination thereof. In addition, a menu item 706 ("SHOW ML model settings") is included and is configured to toggle ML model settings for a given ML model interface window.

As depicted in **FIG. 7****,** different ML model interface windows are respectively associated with identifier field 414 and identifier field 705. The selection of the text mode, as depicted in **FIG. 7** with reference to an identifier field 705 ("TOPIC 1"), is configured to enable editing of text and switching back and forth between previous contents of an ML model interface window. The selection of the chat mode, as depicted in **FIG. 7** with reference to the header 412, is configured to initiate a chat thread in an ML model interface window and then dynamically interact with the user via the input of one or more ML model prompts that reference content from respective ML model interface windows. The chat mode has a chat memory length setting 328 that is configured to determine a number of preceding interactions in the chat thread to be included in the ML model prompt. In contrast to the chat mode, the text mode is capable of editing text. The arrow buttons, such as arrow buttons 707, are configured to toggle between previous contents of text in the text mode, but will not include preceding interactions in the ML model prompt. Thereafter, the one or more ML model prompts are sent to one or more ML models 140, 150 for processing and returning a responsive model response that is then displayed by an ML model interface window.

### Flowchart of a Method for Parallel Interaction with an ML Model

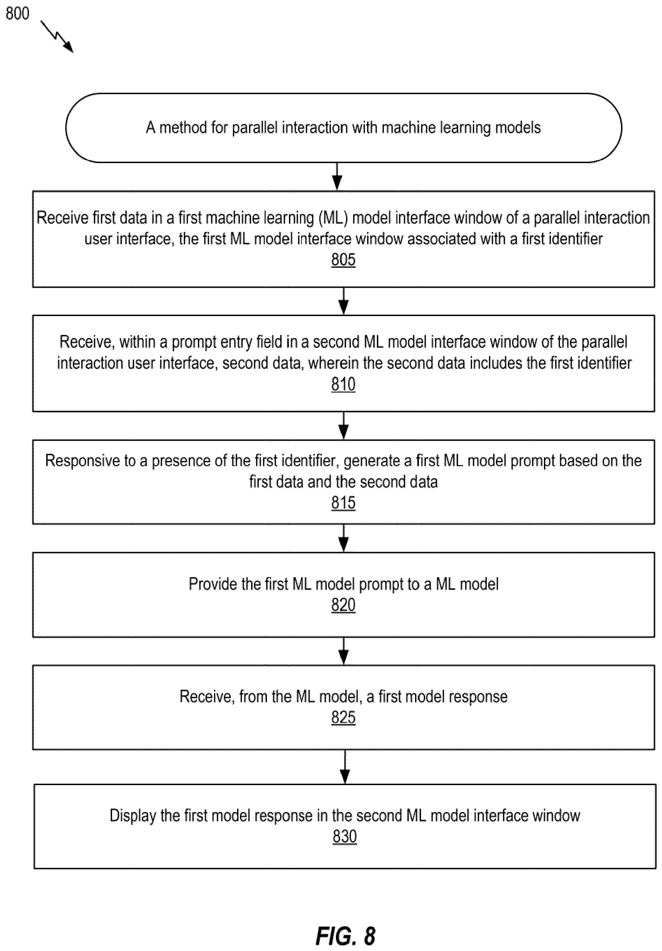

**FIG. 8** depicts a flowchart of a method 800 for parallel interaction with ML models, according to one or more embodiments shown and described herein.

At step 805, the method 800 begins with receiving first data in a first ML model interface window of a parallel interaction user interface, for example like parallel interaction user interface 101. For example, the parallel interaction user interface includes a plurality of ML model interface windows, for example like plurality of ML model interface windows 102. Each of the ML model interface windows is associated with an identifier. In some examples, the identifier includes an identifier field. By way of example and as depicted with reference to **FIGs. 3A-3D****,** a first identifier is a "RESUME" identifier field for a first ML model interface window. A second identifier is "JOB DESCRIPTION" identifier field for a second ML model interface window. A third identifier is a "LIKE/NO LIKE LIST" identifier field for third ML model interface window. A fourth identifier is a "COVER LETTER" identifier field for the fourth ML model interface window. It is understood that other identifiers and/or identifier fields may be used, and are not limited to as such.

The first ML model interface window, for example like first ML model interface window 105, is associated with a first identifier. The ML model interface window associated with the first identifier may include data pertaining to a resume. By way of example, the data may include contact information, objective statement information, experience information, skills information, education information, and the like. In some examples, the data may be uploaded from a file (e.g., as a Microsoft^{®} Word^{®} DOCX or Adobe Acrobat^{®} PDF file) by a user of a client device, for example like computing device 110. In other examples, the data may be copy-paste from the file by a user of the client device. In still other examples, the data may be converted to text format, for example, extracted from an image file, prior to being included in the first ML model interface window. In still other examples, the data may be developed in dialogue with one or more machine learning models, such as one or more ML models 140, 150, utilizing the chat mode of a given ML model interface window. It is understood that the file type content provided into the ML model interface windows is not limited to such files and that other file types may be used, including Microsoft^{®} Excel^{®} XLSX or Microsoft^{®} PowerPoint^{®} PPTX, JPEG, PDF, MPEG. It is further understood that the file types may be generated, retrieved, provided, or otherwise utilized include, without limitation, by connecting to any number of artificial intelligence (AI) systems, such as DALL-E, DALL-E 2, Midjourney, or any combination thereof.

At step 810, the method 800 continues with receiving, within a prompt entry field of a second ML model interface window, for example like second ML model interface window 107, of the parallel interaction user interface, second data that includes the first identifier. For example, the second ML model interface window with a second identifier may include data pertaining to a job description. By way of example, the data may include job description information and the like. The second ML model interface window includes a prompt entry field including a prompt input text field. A prompt generator, for example like prompt generator 122, is configured to receive various datum from respective ML model interface windows. By way of example, the prompt generator is configured to receive first data from an ML model interface window 105, second data from an ML model interface window 107, and the like.

In some examples, the prompt entry field is configured to receive at least one of the identifiers, such as the first identifier. As previously explained, the prompt entry field may be configured to also receive a preceding trigger, but it is not required. To the extent that a trigger is taken into consideration, the trigger may include a word, such as "the" or "my." By way of example, the trigger may be a definite article, an adjective, or another word or phrase that provides a relationship context for an identifier (e.g., first identifier, second identifier, etc.) to a preceding trigger relative to data of an interface window. Upon determining that the trigger precedes the first identifier, the content referred to in the first identifier of the prompt entry field is added. By way of example, upon determining the presence of "my" before "RESUME," the data from the first ML model interface window is included with the prompt, for example, as part of a user-defined declaration. Upon determining the presence of "the" before "JOB DESCRIPTION," the data from the second ML model interface is included with the prompt, for example, as part of another user-defined declaration. In this manner, the prompt of the prompt entry field references and incorporates different content, such as respective data from different ML model interface windows of the parallel interaction user interface.

At step 815, the method 800 continues with, responsive to a presence of the first identifier, generating a first ML model prompt based on the first data and the second data. By way of example, a model prompt may include "What is the probability of encountering drunk customers in this job?", in which case "this" may refer to the preceding trigger. In some examples, at step 815, the method 800 may include responsive to the presence of the preceding trigger, generating a first ML model prompt based on the first data and the second data. For example, the prompt generator is configured to generate one or more ML model prompts, just like the one or more ML model prompts 121. The prompt generator is connected to the parallel interaction user interface. In some examples, the prompt generator may include a single prompt generator. In other examples, the prompt generator may include two or more prompt generators, which are configured to respectively process data received from ML model interface windows of the parallel interaction user interface, and then either collectively generate one or more ML model prompts before transmitting it to the one or more prompt parsers of the one or more ML models via the application programming interface, or individually generate one or more ML model prompts before transmitting a respective ML model prompt to the one or more prompt parsers of the one or more ML models via the application programming interface.

By way of example, a model prompt may include "Say if the job description is a good match for me, considering my resume and my like/no like list," in which case "the" may refer to the preceding trigger relative to "job description" of an ML model interface window, "my" may refer to the preceding trigger relative to "resume" of another ML model interface window, and "my" may refer to the preceding trigger relative to the "like/no like" list of still another ML model interface window. The model prompt may thus be configured to reference and incorporate the data from the respective ML model interface windows.

In yet another example, a model prompt may include "Generate a cover letter for the job description, considering my resume and my like/no like list," in which case "the" may refer to the preceding trigger relative to "job description" of an ML model interface window, "my" may refer to the preceding trigger relative to "resume" of another ML model interface window, and "my" may refer to the preceding trigger relative to the "like/no like" list of still another ML model interface window. The model prompt may thus be configured to reference and incorporate the data from the respective ML model interface windows.

At step 820, the method 800 continues with providing, to an ML model, the first ML model prompt. For example, the model prompt may be generated based on the presence of the preceding trigger "this" before "job" (or "job description" or the like), which is sent to one or more ML models for producing a corresponding model response, just like model response 323, model response 327, model response 320, that is responsive to the model prompt. In some examples, the prompt generator is configured to transmit the one or more ML model prompts to one or more prompt parsers, just like one or more prompt parsers 141, 151 of one or more ML models 140, 150, just like one or more ML models 140, 150, via an application programming interface, just like application programming interface 130. By way of example, the ML interface window may be operating in a chat mode (as described above), in which case a preceding prompt is configured to declare "the job description" (or the like). Continuing with this example, the one or more ML models is configured to recognize that "this job" (or the like) refers to the "job description" as referenced in the chat thread of the ML interface window.

The one or more ML models include a local ML model, a remote ML model, or any combination thereof. In some examples, each of the one or more ML models is configured to include a prompt parser, just like the one or more prompt parsers 141, 151, that is configured to parse the model prompt received from the client device. For example, the model prompt may be received from the prompt generator and locally processed or remotely processed, such as through an instance of a pre-trained ML model, such as a private instance of a trained LLM, or a public facing instance via an API. The one or more ML models may comprise a large language model, such as a generative pre-trained transformer (GPT) model. It is understood that the one or more ML models are not limited to as such, and that other models may be used, including BERT, XLNet, GPT-2, GPT-3, GPT-4, GPT-Neo, GPT-NeoX, GPT-J, Megatron-Turing NLG, Ernie 3.0 Titan, Claude, GLaM, Gopher, LaMDA, Chincilla, PaLM, YaLM 100B, Minerva, BLOOM, Galactica, LLaMA, Cerebras-GPT, Falcon, BloombergGPT, PanGu-Σ, OpenAssistant, and PaLM 2. The ML model interface windows of the parallel interaction user interface are configured to communicate with one or more ML models via an application programming interface.

In some examples, at least one of the plurality of ML model interface windows further includes a ML model settings bar, which includes, among other parameters, a character limiter. The ML model settings bar is configured to determine which LLM(s) the plurality of ML model interface windows is/are connected to, and the corresponding settings. The character limiter may be set by the user and configured to restrict the character limit of the model response. Prior to providing the model response to the one or more ML models for subsequent display by at least one of the plurality of ML model interface windows, the character limiter is set by the user to a desired character limit and taken into account by the one or more ML models. In other examples, the character limiter may be set by the user and configured to restrict tokens and words of the model response prior to providing the model response to the one or more ML models and displayed by at least one of the plurality of ML model interface windows.

At step 825, the method 800 continues with receiving, from the ML model prompt, a first model response. For example, the corresponding model response, such as a first model response, is provided to one of the plurality of ML model interface windows. The model response includes a response to the ML model prompt, such as an assessment, an evaluation, a narrative, an analysis, a formatted document, or the like.

At step 830, the method 800 ends with displaying, in the second ML model interface window, the first model response. For example, the corresponding model response, such as the first model response, is provided to one of the plurality of ML model interface windows for display by the client device.

### Flowchart of a Method for Creating a Document Using Parallel Interaction with an ML Model

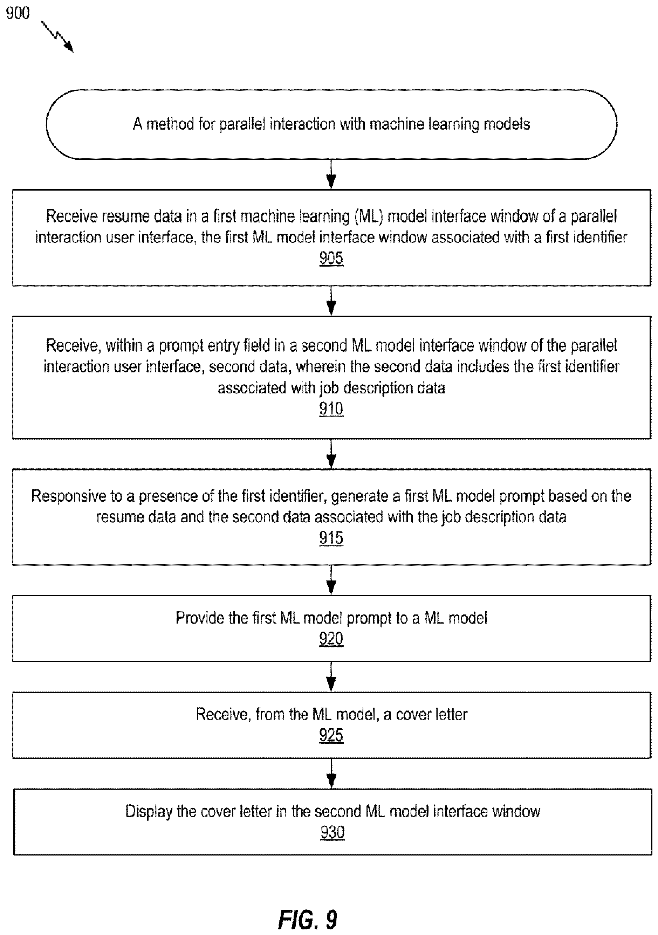

**FIG.** 9 depicts a flowchart of a method 900 for creating a document using parallel interaction with ML models, according to one or more embodiments shown and described herein.

At step 905, the method 900 begins with receiving resume data in a first ML (ML) model interface window of a parallel interaction user interface, for example like parallel interaction user interface 101. For example, the parallel interaction user interface includes a plurality of ML model interface windows, for example like plurality of ML model interface windows 102. The first ML model interface window, for example like first ML model interface window 105, is associated with a first identifier. By way of example, the resume data may include contact information, objective statement information, experience information, skills information, education information, and the like. In some examples, the resume data may be uploaded from a file (e.g., as a Microsoft^{®} Word^{®} DOCX or Adobe Acrobat^{®} PDF file) by a user of a client device, for example like computing device 110. In other examples, the resume data may be copy-paste from the file by a user of the client device. In still other examples, the resume data may be converted to text format, for example, extracted from an image file, prior to being included in the first ML model interface window. In still other examples, the data may be developed in dialogue with one or more machine learning models, such as one or more ML models 140, 150, utilizing the chat mode of a given ML model interface window. It is understood that the file type content provided into the ML model interface windows is not limited to such files and that other file types may be used, including Microsoft^{®} Excel^{®} XLSX or Microsoft^{®} PowerPoint^{®} PPTX, JPEG, PDF, MPEG. It is further understood that the file types may be generated, retrieved, provided, or otherwise utilized include, without limitation, by connecting to any number of AI systems, such as DALL-E, DALL-E 2, Midjourney, or any combination thereof.

At step 910, the method 900 continues with receiving, within a prompt entry field in a second ML model interface window, for example like second ML model interface window 107, of the parallel interaction user interface, second data. The second data includes the first identifier that is associated with job description data. As previously explained, the prompt entry field may be configured to also receive a preceding trigger, but it is not required. The second ML model interface window includes a prompt entry field including a prompt input text field. A prompt generator, for example like prompt generator 122, is configured to receive various datum from respective ML model interface windows. By way of example, the prompt generator is configured to receive the resume data from an ML model interface window 105, job description data from an ML model interface window 107, and the like.

At step 915, the method 900 continues with, responsive to a presence of the first identifier, generating a first ML model prompt based on the resume data and second data associated with the job description data. In some examples, at step 915 the method 800 may include responsive to the presence of the preceding trigger, generating a first ML model prompt based on the resume and the job description data. For example, the prompt generator is configured to generate one or more ML model prompts, just like the one or more ML model prompts 121. The prompt generator is connected to the parallel interaction user interface. In some examples, the prompt generator may include a single prompt generator. In other examples, the prompt generator may include two or more prompt generators, which are configured to respectively process data received from ML model interface windows of the parallel interaction user interface, and then either collectively generate one or more ML model prompts before transmitting it to the one or more prompt parsers of the one or more ML models via the application programming interface, or individually generate one or more ML model prompts before transmitting a respective ML model prompt to the one or more prompt parsers of the one or more ML models via the application programming interface.

At step 920, the method 900 continues with providing the first ML model prompt to a ML model. For example, the first model prompt is sent to one or more ML models for producing a corresponding model response, just like model response 323, model response 327, model response 320, that is responsive to the first model prompt. In some examples, the prompt generator is configured to transmit the one or more ML model prompts to one or more prompt parsers, just like one or more prompt parsers 141, 151 of one or more ML models 140, 150, just like one or more ML models 140, 150, via an application programming interface, just like application programming interface 130. By way of example, the ML interface window may be operating in a chat mode (as described above), in which case a preceding prompt is configured to declare "the job description" (or the like). Continuing with this example, the one or more ML models is configured to recognize that "this job" (or the like) refers to the "job description" as referenced in the chat thread of the ML interface window.

The one or more ML models include a local ML model, a remote ML model, or any combination thereof. In some examples, each of the one or more ML models is configured to include a prompt parser, just like one or more prompt parsers 141, 151, that is configured to parse the model prompt received from the client device. For example, the model prompt may be received from the prompt generator and locally processed or remotely processed, such as through an instance of a pre-trained ML model, such as a private instance of a trained LLM, or a public facing instance via an API. The one or more ML models may comprise a large language model, such as a generative pre-trained transformer (GPT) model. It is understood that the one or more ML models are not limited to as such, and that other models may be used, including BERT, XLNet, GPT-2, GPT-3, GPT-4, GPT-Neo, GPT-NeoX, GPT-J, Megatron-Turing NLG, Ernie 3.0 Titan, Claude, GLaM, Gopher, LaMDA, Chincilla, PaLM, YaLM 100B, Minerva, BLOOM, Galactica, LLaMA, Cerebras-GPT, Falcon, BloombergGPT, PanGu-Σ, OpenAssistant, and PaLM 2. The ML model interface windows of the parallel interaction user interface are configured to communicate with one or more ML models via an application programming interface.

In some examples, at least one of the plurality of ML model interface windows further includes ML model settings bar, which includes, among other parameters, a character limiter. The ML model settings bar is configured to determine which LLM(s) the plurality of ML model interface windows is/are connected to, and the corresponding settings. The character limiter may be set by the user and configured to restrict the character limit of the model response. Prior to providing the model response to the one or more ML models for subsequent display by at least one of the plurality of ML model interface windows, the character limiter is set by the user to a desired character limit and taken into account by the one or more ML models. In other examples, the character limiter may be set by the user and configured to restrict tokens and words of the model response prior to providing the model response to the one or more ML models and displayed by at least one of the plurality of ML model interface windows.

At step 925, the method 900 continues with receiving, from the ML model, a cover letter. For example, the corresponding model response, such as a cover letter, is provided to one of the plurality of ML model interface windows. The model response, such as the cover letter, includes a response to the ML model prompt.

At step 930, the method 900 ends with displaying the cover letter in the second ML model interface window. For example, the corresponding model response, such as the cover letter, is provided to one of the plurality of ML model interface windows for display by the client device. In some examples, the cover letter may be displayed in the second ML model interface window, just like ML model interface window 107. In other examples, the cover letter may be displayed in a window other than the second ML model interface window, including but not limited to ML model interface window 113.

An example of method 900 will now be explained. For example, a resume is provided or otherwise received in the first ML model interface window.

Continuing with the above example, after the resume has been provided or otherwise received in the first ML model interface window, a job description is provided or otherwise received (such as by copy-paste, or browsing a database (different or similar as prompt database 120 that includes job descriptions) in the second ML model interface window.

Continuing with the above example, a chat mode is selected (as previously described above) in another ML model interface window. Within this another ML model interface window, a chat thread is initiated and configured to investigate how well the resume and the job description are a match by referring to each of them (that is, referring to both the resume as well as the job description of each of the respective ML model interface windows). In some examples, the chat thread may also reference yet another ML model interface window, such as the user likes and user dislikes. The resume in the first ML model interface window is then modified by prompting the first ML model interface window, with reference to the content from other ML model interface windows.

With continued reference to the above example, a still different ML model interface window, with an identifier "COVER LETTER", is prompted to construct a cover letter with reference to the content from other ML model interface windows.

It is understood that the above example can be an iterative method 900 that is configured to change job descriptions, modify the resume and/or the user likes and user dislikes for each respective ML model interface window, until a satisfactory set of matching work documents matches (or nearly matches) the user likes and user dislikes.

It is further understood that while the above example of method 900 pertains to employment applications, including resume, cover letter, job description, and the like, the present disclosure is not limited to such. Without limitation, other applications within the scope of the disclosure include situations where a plurality of document sets are created or populated with data, that reference other documents within the set, such as: business entity formation; licensure (for example, obtaining a liquor license, or the like); professional licensure (for example, obtaining a medical license or a law license, or the like); tax preparation; college and higher education applications; mortgage and financing applications; accounting; and the like.

### Example Parallel Interaction User Interface System

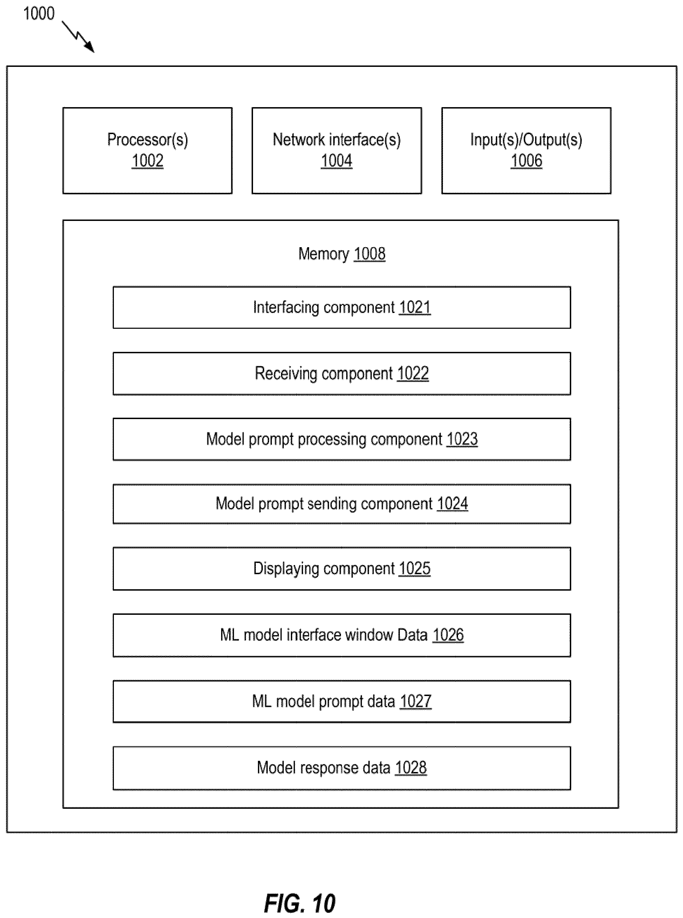

**FIG. 10** schematically depicts an example parallel interaction user interface system 1000, according to one or more embodiments shown and described herein. As illustrated, the parallel interaction user interface system 1000 includes one or more processors 1002, one or more network interfaces 1004, inputs/outputs 1006, and memory 1008.

Generally, processor(s) 1002 are configured to execute computer-executable instructions (e.g., software code) to perform various functions, as described herein.

The network interface(s) 1004 generally provides data access to any sort of data network, including personal area networks (PANs), local area networks (LANs), wide area networks (WANs), the Internet, and the like.

The input(s) and output(s) 1006 generally provide means for providing data to and from the online document creation system parallel interaction user interface system, such as via connection to computing device peripherals, including user interface peripherals.

The memory 1008 is configured to store various types of components and data.

In this example, memory 1008 includes an interfacing component 1021, a receiving component 1022, a model prompt processing component 1023, a model prompt sending component 1024, and a displaying component 1025.

Interfacing component 1021 is configured to perform processes, for example, corresponding to establishing, maintaining, terminating a connection for communication and interfacing with components of environment 100 depicted and described with reference to **FIG. 1** and **FIG. 2****.** For example, the interfacing component 1021 is configured to interface with the prompt database 120, the application programming interface 130, and/or one or more ML models 140, 150. In some examples, the interfacing component 1021 may be similar to that of network interface(s) 1004. In other examples, the interfacing component 1021 may be different than network interface(s) 1004.

Receiving component 1022 is configured to perform processes, for example, corresponding to steps 805, 810, and 825 of the method depicted and described with reference to **FIG. 8****,** and steps 905, 910, and 925 of the method depicted and described with reference to **FIG. 9****,** and/or other functions. For example, the receiving component 1022 is configured to receive data, including but not limited to first and second data, from client device 210 depicted and described with reference to **FIG. 2****.** For example, the receiving component 1022 is configured to receive data 305, 310, 315 in a first ML model interface window 105 of a parallel interaction user interface 101. In addition, the receiving component 1022 is configured to receive data 305, 310, 315 in a second ML model interface window 107 of the parallel interaction user interface 101. Still further, the receiving component 1022 is configured to receive any of one or more model responses, including but not limited to model response 323, model response 327, and model response 320, from the one or more ML models 140, 150. By way of example, the data 305, 310, 315, and the like, received in the respective ML model interface windows 102 from a client device 210, is stored in and/or retrieved from ML model interface window data 1026.

Model prompt processing component 1023 is configured to perform processes, for example, corresponding to step 815 of the method depicted and described with reference to **FIG. 8****,** and step 915 of the method depicted and described with reference to **FIG. 9****,** and/or other functions. For example, the model prompt processing component 1023 is configured to responsive to a presence of the first identifier, generate, one or more ML model prompts 121, such as a first ML model prompt, based on the first data and the second data.

In some examples, the one or more ML model prompts 121, that are generated by the model prompt processing component 1023, are stored in and/or retrieved from ML model prompt data 1027. In other examples, the one or more ML model prompts 121 that are generated by the model prompt processing component 1023, are stored in and/or retrieved from the prompt database 120 as depicted and described with reference to **FIGs. 1** and **2****.** Still further, the ML model prompt data 1027 is configured to save, update, and retrieve metadata in association with the one or more ML model prompts 121, as depicted and described with reference to **FIGs. 4A-4B**, **5A-5B**, and **6**. In other examples, the prompt database 120 is configured to save, update, and retrieve metadata in association with the one or more ML model prompts 121, as depicted and described with reference to **FIGs. 4A-4B**, **5A-5B**, and **6**.

Model prompt sending component 1024 is configured to perform processes, for example, corresponding to step 820 of the method depicted and described with reference to **FIG. 8****,** and step 920 of the method depicted and described with reference to **FIG. 9****,** and/or other functions. For example, the model prompt sending component 1024 is configured to provide the one or more ML model prompts 121 to the one or more ML models 140, 150.

Displaying component 1025 is configured to perform processes, for example, corresponding to step 830 of the method depicted and described with reference to **FIG. 8****,** and step 930 of the method depicted and described with reference to **FIG. 9****,** and/or other functions. For example, the displaying component 1025 is configured to display the one or more model responses, including but not limited to the model response 323, the model response 327, and the model response 320, from the one or more ML models 140, 150. By way of example, the one or more model responses, such as the model response 323, the model response 327, and the model response 320, are stored in and/or retrieved from model response data 1028.

In addition, the displaying component 1025 is configured to display a plurality of ML model interface windows 102 of the parallel interaction user interface 101 depicted and described with reference to **FIGs. 1****,** **2****,** and **3A****-3D.** Moreover, the displaying component 1025 is configured to display a prompt entry field 303 of at least one of the ML model interface windows. Still further, the displaying component 1025 is configured to display any aspect, component, or like feature of the respective screens 300, 400, 500, 600, and 700 examples depicted and described with reference to **FIGs. 3A-3D**, **4A-4B**, **5A-5B****,** **6**, and **7**.

The parallel interaction user interface system 1000 may be implemented in various ways. For example, the parallel interaction user interface system 1000 may be implemented within on-site, remote, or cloud-based computing devices. The parallel interaction user interface system 1000 may generally be configured to perform the methods 800 and 900 depicted and described with reference to **FIGs. 8** and **9****.**

The parallel interaction user interface system 1000 is just one example, and other configurations are possible. For example, in alternative embodiments, aspects described with respect to the parallel interaction user interface system 1000 may be omitted, added, or substituted for alternative aspects.

In some examples, the computing device 110 depicted and described with reference to **FIGs. 1** and **2** may correspond to any and all constituent components of parallel interaction user interface system 1000 depicted and described with reference to **FIG. 10****.** For example, the processor 103 may correspond to the one or more processors 1002, the memory 104 may correspond to the memory 1008 of **FIG. 10****,** the ML model interface windows 102 may correspond to the displaying component 1025.

### Additional Considerations

The preceding description is provided to enable any person skilled in the art to practice the various embodiments described herein. The examples discussed herein are not limiting of the scope, applicability, or embodiments set forth in the claims. Various modifications to these embodiments will be readily apparent to those skilled in the art, and the generic principles defined herein may be applied to other embodiments. For example, changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

As used herein, the word "exemplary" means "serving as an example, instance, or illustration." Any aspect described herein as "exemplary" is not necessarily to be construed as preferred or advantageous over other aspects.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c). Reference to an element in the singular is not intended to mean only one unless specifically so stated, but rather "one or more." For example, reference to an element (e.g., "a processor." ^{"}a memory," etc.), unless otherwise specifically stated, should be understood to refer to one or more elements (e.g., "one or more processors," "one or more memories," etc.). The terms "set" and "group" are intended to include one or more elements, and may be used interchangeably with "one or more." Where reference is made to one or more elements performing functions (e.g., steps of a method), one element may perform all functions, or more than one element may collectively perform the functions. When more than one element collectively performs the functions, each function need not be performed by each of those elements (e.g., different functions may be performed by different elements) and/or each function need not be performed in whole by only one element (e.g., different elements may perform different sub-functions of a function). Similarly, where reference is made to one or more elements configured to cause another element (e.g., an apparatus) to perform functions, one element may be configured to cause the other element to perform all functions, or more than one element may collectively be configured to cause the other element to perform the functions. Unless specifically stated otherwise, the term "some" refers to one or more.

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims. Further, the various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The following claims are not intended to be limited to the embodiments shown herein, but are to be accorded the full scope consistent with the language of the claims. Within a claim, reference to an element in the singular is not intended to mean "one and only one" unless specifically so stated, but rather "one or more.

## Claims

1. A method for parallel interaction with machine learning models, comprising:
receiving first data in a first machine learning (ML) model interface window (105) of a parallel interaction user interface, wherein the first ML model interface window is associated with a first identifier and the parallel interaction user interface comprises the first ML model interface window and a second ML model interface window (107), the first ML model interface window and the second ML model interface window each being configured to initiate a chat thread with one or more respective ML models;
receiving, within a prompt entry field in the second ML model interface window, second data from a user, wherein the second data includes the first identifier;
responsive to a presence of the first identifier, generating (205) a first ML model prompt based on processing of a plurality of parallel inputs comprising the first data and the second data;
providing (207), to a first ML model, the first ML model prompt;
receiving (211), from the first ML model, a first model response; and
displaying (213) the first model response in the second ML model interface window.

2. The method of claim 1, further comprising:
receiving the second data in the second ML model interface window that corresponds to a second ML model;
generating the first ML model prompt based on the first data and the second data;
establishing communication between the first ML model and the second ML model;
providing the first ML prompt to the first ML model and the second ML model;
parsing the first ML prompt by the first ML model and the second ML model; and
receiving from the first ML model and the second ML model, the first model response.

3. The method of claim 1 or 2, further comprising parsing the second data to determine presence of one or more identifiers, including the first identifier, wherein each of the one or more identifiers is associated with a respective ML model interface window.

4. The method of any preceding claim, further comprising:
receiving an indication to save the first ML model prompt to a prompt database;
saving the first ML model prompt to the prompt database; and
retrieving the saved first ML model prompt from the prompt database for one or more of: editing the saved first ML model prompt, sharing the saved first ML model prompt, or commenting on the saved first ML model prompt.

5. The method of claim 4, further comprising:
receiving metadata regarding the first ML model prompt;
saving the metadata in the prompt database in association with the first ML model prompt; and
retrieving the saved metadata from the prompt database for one or more of: editing the saved metadata, sharing the saved metadata, or commenting on the saved metadata.

6. The method of any preceding claim, further comprising:
receiving a mode selection in the second ML model interface window enabling a chat mode,
wherein generating the first ML model prompt is further based on a configured number of previous interactions with the first ML model.

7. The method of any preceding claim, further comprising receiving a mode selection in the first ML model interface window enabling a text mode.

8. A parallel interaction user interface system, comprising:
a computing device comprising at least one processor and at least one computer-readable medium storing computer readable instructions that, when executed by the at least one processor, cause the computing device to:
receive first data in a first machine learning (ML) model interface window (105) of a parallel interaction user interface, wherein the first ML model interface window is associated with a first identifier and the parallel interaction user interface comprises the first ML model interface window and a second ML model interface window (107), the first ML model interface window and the second ML model interface window each being configured to initiate a chat thread with one or more respective ML models;
receive, within a prompt entry field in the second ML model interface window, second data from a user, wherein the second data includes the first identifier;
responsive to a presence of the first identifier, generate (205) a first ML model prompt based on processing of a plurality of parallel inputs comprising the first data and the second data;
provide (207), to a first ML model, the first ML model prompt;
receive (211), from the first ML model, a first model response; and
display (213) the first model response in the second ML model interface window.

9. The parallel interaction user interface system of claim 8, wherein the computer readable instructions, when executed by the at least one processor, further cause the computing device to parse the second data to determine presence of one or more identifiers, including the first identifier, wherein each of the one or more identifiers is associated with a respective ML model interface window.

10. The parallel interaction user interface system of claim 8 or 9, wherein the computer readable instructions, when executed by the at least one processor, further cause the computing device to:
receive an indication to save the first ML model prompt to a prompt database;
save the first ML model prompt to the prompt database; and
retrieve the saved first ML model prompt from the prompt database for one or more of: editing the saved first ML model prompt, sharing the saved first ML model prompt, or commenting on the saved first ML model prompt.

11. The parallel interaction user interface system of claim 10, wherein the computer readable instructions, when executed by the at least one processor, further cause the computing device to:
receive metadata regarding the first ML model prompt;
save the metadata in the prompt database in association with the first ML model prompt; and
retrieve the saved metadata from the prompt database for one or more of: editing the saved metadata, sharing the saved metadata, or commenting on the saved metadata.

12. The parallel interaction user interface system of any of claims 8 to 11, wherein the computer readable instructions, when executed by the at least one processor, further cause the computing device to:
receive a mode selection in the second ML model interface window enabling a chat mode,
wherein to cause the computing device to generate the first ML model prompt, the computer readable instructions, when executed by the at least one processor, cause the computing device to generate the first ML model prompt further based on a configured number of previous interactions with the first ML model.

13. The parallel interaction user interface system of any of claims 8 to 12, wherein the computer readable instructions, when executed by the at least one processor, further cause the computing device to receive a mode selection in the first ML model interface window enabling a text mode.

14. The parallel interaction user interface system of any of claims 8 to 13, wherein the computer readable instructions, when executed by the at least one processor, further cause the computing device to:
receive a selection of a second ML model prompt stored in a prompt database;
edit the second ML model prompt;
provide, to the first ML model, the edited second ML model prompt; and
receive, from the ML model, a second model response.

15. A computer-readable medium comprising instructions that, when executed by at least one processor, cause the at least one processor to perform operations comprising:
receiving first data in a first machine learning (ML) model interface window (105) of a parallel interaction user interface, wherein the first ML model interface window is associated with a first identifier and the parallel interaction user interface comprises the first ML model interface window and a second ML model interface window (107), the first ML model interface window and the second ML model interface window each being configured to initiate a chat thread with one or more respective ML models;
receiving, within a prompt entry field in the second ML model interface window, second data from a user, wherein the second data includes the first identifier;
responsive to a presence of the first identifier, generating (205) a first ML model prompt based on processing of a plurality of parallel inputs comprising the first data and the second data;
providing (207), to a first ML model, the first ML model prompt;
receiving (211), from the first ML model, a first model response; and
displaying (213) the first model response in the second ML model interface window.

## Patentansprüche

1. Verfahren zur parallelen Interaktion mit Modellen für maschinelles Lernen, umfassend:
Empfangen erster Daten in einem ersten ML-Modell (Modell für maschinelles Lernen)-Schnittstellenfenster (105) einer Benutzerschnittstelle für parallele Interaktion, wobei das erste ML-Modell-Schnittstellenfenster einem ersten Identifikator zugeordnet ist und die Benutzerschnittstelle für parallele Interaktion das erste ML-Modell-Schnittstellenfenster und ein zweites ML-Modell-Schnittstellenfenster (107) umfasst, wobei das erste ML-Modell-Schnittstellenfenster und das zweite ML-Modell-Schnittstellenfenster jeweils so konfiguriert sind, dass sie einen Chat-Thread mit einem oder mehreren entsprechenden ML-Modellen initiieren;
Empfangen zweiter Daten von einem Benutzer innerhalb eines Eingabefeldes für Prompts im zweiten ML-Modell-Schnittstellenfenster, wobei die zweiten Daten den ersten Identifikator enthalten;
Erzeugen (205) eines ersten ML-Modell-Prompts als Antwort auf das Vorhandensein des ersten Identifikators, basierend auf der Verarbeitung einer Vielzahl von parallelen Eingaben, umfassend die ersten Daten und die zweiten Daten;
Bereitstellen (207) des ersten ML-Modell-Prompts an ein erstes ML-Modell;
Empfangen (211) einer ersten Modellantwort vom ersten ML-Modell; und
Anzeigen (213) der ersten Modellantwort im zweiten ML-Modell-Schnittstellenfenster.

2. Verfahren nach Anspruch 1, ferner umfassend:
Empfangen der zweiten Daten in dem zweiten ML-Modell-Schnittstellenfenster, das einem zweiten ML-Modell entspricht;
Erzeugen des ersten ML-Modell-Prompts auf der Grundlage der ersten Daten und der zweiten Daten;
Aufbauen der Kommunikation zwischen dem ersten ML-Modell und dem zweiten ML-Modell;
Übermitteln des ersten ML-Prompts an das erste ML-Modell und das zweite ML-Modell;
Auswerten des ersten ML-Prompts durch das erste ML-Modell und das zweite ML-Modell; und
Empfangen der ersten Modellantwort vom ersten ML-Modell und vom zweiten ML-Modell.

3. Verfahren nach Anspruch 1 oder 2, ferner umfassend das Auswerten der zweiten Daten, um das Vorhandensein eines oder mehrerer Identifikatoren, einschließlich des ersten Identifikators, zu ermitteln, wobei jeder der einen oder mehreren Identifikatoren einem jeweiligen ML-Modell-Schnittstellenfenster zugeordnet ist.

4. Verfahren nach einem der vorhergehenden Ansprüche, ferner umfassend:
Empfangen einer Anweisung, den ersten ML-Modell-Prompt in einer Prompt-Datenbank zu speichern;
Speichern des ersten ML-Modell-Prompts in der Prompt-Datenbank; und
Abrufen des gespeicherten ersten ML-Modell-Prompts aus der Prompt-Datenbank für eine oder mehrere der folgenden Aktionen: Bearbeiten des gespeicherten ersten ML-Modell-Prompts, Teilen des gespeicherten ersten ML-Modell-Prompts, oder Kommentieren des gespeicherten ersten ML-Modell-Prompts.

5. Verfahren nach Anspruch 4, ferner umfassend:
Empfangen von Metadaten bezüglich des ersten ML-Modell-Prompts;
Speichern der Metadaten in der Prompt-Datenbank in Verbindung mit dem ersten ML-Modell-Prompt; und
Abrufen der gespeicherten Metadaten aus der Prompt-Datenbank für eine oder mehrere der folgenden Aktionen: Bearbeiten der gespeicherten Metadaten, Teilen der gespeicherten Metadaten, oder Kommentieren der gespeicherten Metadaten.

6. Verfahren nach einem der vorhergehenden Ansprüche, ferner umfassend:
Empfangen einer Modusauswahl im zweiten ML-Modell-Schnittstellenfenster, die einen Chat-Modus aktiviert,
wobei die Erzeugung des ersten ML-Modell-Prompts ferner auf einer eingestellten Anzahl früherer Interaktionen mit dem ersten ML-Modell basiert.

7. Verfahren nach einem der vorhergehenden Ansprüche, ferner umfassend das Empfangen einer Modusauswahl im ersten ML-Modell-Schnittstellenfenster, wodurch ein Textmodus aktiviert wird.

8. Benutzerschnittstellensystem für parallele Interaktion, umfassend:
ein Rechengerät, das mindestens einen Prozessor und mindestens ein computerlesbares Medium umfasst, auf dem computerlesbare Anweisungen gespeichert sind, die, wenn sie von dem mindestens einen Prozessor ausgeführt werden, bewirken, dass das Rechengerät:
erste Daten in einem ersten ML-Modell (Modell für maschinelles Lernen)-Schnittstellenfenster (105) einer Benutzerschnittstelle für parallele Interaktion empfängt, wobei das erste ML-Modell-Schnittstellenfenster einem ersten Identifikator zugeordnet ist und die Benutzerschnittstelle für parallele Interaktion das erste ML-Modell-Schnittstellenfenster und ein zweites ML-Modell-Schnittstellenfenster (107) umfasst, wobei das erste ML-Modell-Schnittstellenfenster und das zweite ML-Modell-Schnittstellenfenster jeweils so konfiguriert sind, dass sie einen Chat-Thread mit einem oder mehreren entsprechenden ML-Modellen initiieren;
zweite Daten von einem Benutzer innerhalb eines Eingabefeldes für Prompts im zweiten ML-Modell-Schnittstellenfenster empfängt, wobei die zweiten Daten den ersten Identifikator enthalten;
als Antwort auf das Vorhandensein des ersten Identifikators einen ersten ML-Modell-Prompt erzeugt (205), basierend auf der Verarbeitung einer Vielzahl von parallelen Eingaben, umfassend die ersten Daten und die zweiten Daten;
einem ersten ML-Modell den ersten ML-Modell-Prompt bereitstellt (207);
eine erste Modellantwort vom ersten ML-Modell empfängt (211); und
die erste Modellantwort im zweiten ML-Modell-Schnittstellenfenster anzeigt (213).

9. Benutzerschnittstellensystem für parallele Interaktion nach Anspruch 8, wobei die computerlesbaren Anweisungen, wenn sie von dem mindestens einen Prozessor ausgeführt werden, das Rechengerät ferner veranlassen, die zweiten Daten auszuwerten, um das Vorhandensein eines oder mehrerer Identifikatoren, einschließlich des ersten Identifikators, zu ermitteln, wobei jeder der einen oder mehreren Identifikatoren einem jeweiligen ML-Modell-Schnittstellenfenster zugeordnet ist.

10. Benutzerschnittstellensystem für parallele Interaktion nach Anspruch 8 oder 9, wobei die computerlesbaren Anweisungen, wenn sie von dem mindestens einen Prozessor ausgeführt werden, das Rechengerät ferner dazu veranlassen:
eine Anweisung zum Speichern des ersten ML-Modell-Prompts in einer Prompt-Datenbank zu empfangen;
den ersten ML-Modell-Prompt in der Prompt-Datenbank zu speichern; und
den gespeicherten ersten ML-Modell-Prompt aus der Prompt-Datenbank abzurufen, für eine oder mehrere der folgenden Aktionen: Bearbeiten des gespeicherten ersten ML-Modell-Prompts, Teilen des gespeicherten ersten ML-Modell-Prompts, oder Kommentieren des gespeicherten ersten ML-Modell-Prompts.

11. Benutzerschnittstellensystem für parallele Interaktion nach Anspruch 10, wobei die computerlesbaren Anweisungen, wenn sie von dem mindestens einen Prozessor ausgeführt werden, das Rechengerät ferner dazu veranlassen:
Metadaten bezüglich des ersten ML-Modell-Prompts zu empfangen;
die Metadaten in der Prompt-Datenbank in Verbindung mit dem ersten ML-Modell-Prompt zu speichern; und
die gespeicherten Metadaten aus der Prompt-Datenbank abzurufen, für eine oder mehrere der folgenden Aktionen: Bearbeiten der gespeicherten Metadaten, Teilen der gespeicherten Metadaten, oder Kommentieren der gespeicherten Metadaten.

12. Benutzerschnittstellensystem für parallele Interaktion nach einem der Ansprüche 8 bis 11, wobei die computerlesbaren Anweisungen, wenn sie von dem mindestens einen Prozessor ausgeführt werden, das Rechengerät ferner dazu veranlassen:
eine Modusauswahl im zweiten ML-Modell-Schnittstellenfenster zu empfangen, die einen Chat-Modus aktiviert,
wobei, um das Rechengerät dazu zu veranlassen, den ersten ML-Modell-Prompt zu erzeugen, die computerlesbaren Anweisungen, wenn sie von dem mindestens einen Prozessor ausgeführt werden, das Rechengerät dazu veranlassen, den ersten ML-Modell-Prompt ferner auf Basis einer eingestellten Anzahl früherer Interaktionen mit dem ersten **ML-**Modell zu erzeugen.

13. Benutzerschnittstellensystem für parallele Interaktion nach einem der Ansprüche 8 bis 12, wobei die computerlesbaren Anweisungen, wenn sie von dem mindestens einen Prozessor ausgeführt werden, das Rechengerät ferner dazu veranlassen, im ersten ML-Modell-Schnittstellenfenster eine Modusauswahl zu empfangen, die einen Textmodus aktiviert.

14. Benutzerschnittstellensystem für parallele Interaktion nach einem der Ansprüche 8 bis 13, wobei die computerlesbaren Anweisungen, wenn sie von dem mindestens einen Prozessor ausgeführt werden, das Rechengerät ferner dazu veranlassen:
eine Auswahl eines zweiten ML-Modell-Prompts zu empfangen, der in einer Prompt-Datenbank gespeichert ist;
den zweiten ML-Modell-Prompt zu bearbeiten;
dem ersten ML-Modell den bearbeiteten zweiten ML-Modell-Prompt zu übermitteln; und
vom ML-Modell eine zweite Modellantwort zu empfangen.

15. Computerlesbares Medium, das Anweisungen umfasst, die, wenn sie von mindestens einem Prozessor ausgeführt werden, bewirken, dass der mindestens eine Prozessor Vorgänge ausführt, die Folgendes umfassen:
Empfangen erster Daten in einem ersten ML-Modell (Modell für maschinelles Lernen)-Schnittstellenfenster (105) einer Benutzerschnittstelle für parallele Interaktion, wobei das erste ML-Modell-Schnittstellenfenster einem ersten Identifikator zugeordnet ist und die Benutzerschnittstelle für parallele Interaktion das erste ML-Modell-Schnittstellenfenster und ein zweites ML-Modell-Schnittstellenfenster (107) umfasst, wobei das erste ML-Modell-Schnittstellenfenster und das zweite ML-Modell-Schnittstellenfenster jeweils so konfiguriert sind, dass sie einen Chat-Thread mit einem oder mehreren entsprechenden ML-Modellen initiieren;
Empfangen zweiter Daten von einem Benutzer innerhalb eines Eingabefeldes für Prompts im zweiten ML-Modell-Schnittstellenfenster, wobei die zweiten Daten den ersten Identifikator enthalten;
Erzeugen (205) eines ersten ML-Modell-Prompts als Antwort auf das Vorhandensein des ersten Identifikators, basierend auf der Verarbeitung einer Vielzahl von parallelen Eingaben, umfassend die ersten Daten und die zweiten Daten;
Bereitstellen (207) des ersten ML-Modell-Prompts an ein erstes ML-Modell;
Empfangen (211) einer ersten Modellantwort vom ersten ML-Modell; und
Anzeigen (213) der ersten Modellantwort im zweiten ML-Modell-Schnittstellenfenster.

## Revendications

1. Procédé d'interaction parallèle avec des modèles d'apprentissage automatique, comprenant :
la réception de premières données dans une première fenêtre (105) d'interface de modèle d'apprentissage automatique (ML pour « Machine Learning ») d'une interface utilisateur d'interaction parallèle, la première fenêtre d'interface de modèle ML étant associée à un premier identifiant et l'interface utilisateur d'interaction parallèle comprenant la première fenêtre d'interface de modèle ML et une seconde fenêtre (107) d'interface de modèle ML, la première fenêtre d'interface de modèle ML et la seconde fenêtre d'interface de modèle ML étant chacune configurées pour lancer un fil de discussion avec un ou plusieurs modèles ML respectifs ;
la réception, dans un champ de saisie d'invite de la seconde fenêtre d'interface de modèle ML, de secondes données provenant d'un utilisateur, les secondes données incluant le premier identifiant,
en réponse à une présence du premier identifiant, la génération (205) d'une première invite de modèle ML sur la base du traitement d'une pluralité d'entrées parallèles comprenant les premières données et les secondes données ;
la fourniture (207), à un premier modèle ML, de la première invite de modèle ML ;
la réception (211), en provenance du premier modèle ML, d'une première réponse de modèle ; et
l'affichage (213) de la première réponse de modèle dans la seconde fenêtre d'interface de modèle ML.

2. Procédé selon la revendication 1, comprenant en outre :
la réception des secondes données dans la seconde fenêtre d'interface de modèle ML correspondant à un second modèle ML ;
la génération de la première invite de modèle ML sur la base des premières données et des secondes données ;
l'établissement d'une communication entre le premier modèle ML et le second modèle ML;
la fourniture de la première invite ML au premier modèle ML et au second modèle ML ;
l'analyse de la première invite ML par le premier modèle ML et le second modèle ML ; et
la réception, en provenance du premier modèle ML et du second modèle ML, de la première réponse de modèle.

3. Procédé selon la revendication 1 ou 2, comprenant en outre l'analyse des secondes données afin de déterminer une présence d'un ou plusieurs identifiants, y compris le premier identifiant, dans lequel chacun des un ou plusieurs identifiants est associé à une fenêtre d'interface de modèle ML respective.

4. Procédé selon une quelconque revendication précédente, comprenant en outre :
la réception d'une indication visant à enregistrer la première invite de modèle ML dans une base de données d'invites ;
l'enregistrement de la première invite de modèle ML dans la base de données d'invites ; et
la récupération de la première invite de modèle ML enregistrée à partir de la base de données d'invites à des fins d'un ou plusieurs parmi : l'édition de la première invite de modèle ML enregistrée, le partage de la première invite de modèle ML enregistrée ou l'ajout de commentaire à la première invite de modèle ML enregistrée.

5. Procédé selon la revendication 4, comprenant en outre :
la réception de métadonnées concernant la première invite de modèle ML ;
l'enregistrement des métadonnées dans la base de données d'invites en association avec la première invite de modèle ML ; et
la récupération des métadonnées enregistrées à partir de la base de données d'invites à des fins d'un ou plusieurs parmi : l'édition des métadonnées enregistrées, le partage des métadonnées enregistrées ou l'ajout de commentaire aux métadonnées enregistrées.

6. Procédé selon une quelconque revendication précédente, comprenant en outre :
la réception d'une sélection de mode dans la seconde fenêtre d'interface de modèle ML activant un mode « chat »,
dans lequel la génération de la première invite de modèle ML est en outre basée sur un nombre configuré d'interactions précédentes avec le premier modèle ML.

7. Procédé selon une quelconque revendication précédente, comprenant en outre la réception d'une sélection de mode dans la première fenêtre d'interface de modèle ML activant un mode « texte ».

8. Système d'interface utilisateur d'interaction parallèle, comprenant :
un dispositif informatique comprenant au moins un processeur et au moins un support lisible par ordinateur stockant des instructions lisibles par ordinateur qui, lorsqu'elles sont exécutées par l'au moins un processeur, amènent le dispositif informatique à :
recevoir des premières données dans une première fenêtre (105) d'interface de modèle d'apprentissage automatique (ML pour « Machine Learning ») d'une interface utilisateur d'interaction parallèle, la première fenêtre d'interface de modèle ML étant associée à un premier identifiant et l'interface utilisateur d'interaction parallèle comprenant la première fenêtre d'interface de modèle ML et une seconde fenêtre (107) d'interface de modèle ML, la première fenêtre d'interface de modèle ML et la seconde fenêtre d'interface de modèle ML étant chacune configurées pour lancer un fil de discussion avec un ou plusieurs modèles ML respectifs ;
recevoir, dans un champ de saisie d'invite de la seconde fenêtre d'interface de modèle ML, des secondes données provenant d'un utilisateur, les secondes données incluant le premier identifiant ;
en réponse à une présence du premier identifiant, générer (205) une première invite de modèle ML sur la base du traitement d'une pluralité d'entrées parallèles comprenant les premières données et les secondes données ;
fournir (207), à un premier modèle ML, la première invite de modèle ML ;
recevoir (211), en provenance du premier modèle ML, une première réponse de modèle ; et
afficher (213) la première réponse de modèle dans la seconde fenêtre d'interface de modèle ML.

9. Système d'interface utilisateur d'interaction parallèle selon la revendication 8, dans lequel les instructions lisibles par ordinateur, lorsqu'elles sont exécutées par l'au moins un processeur, amènent en outre le dispositif informatique à analyser les secondes données afin de déterminer une présence d'un ou plusieurs identifiants, y compris le premier identifiant, dans lequel chacun des un ou plusieurs identifiants est associé à une fenêtre d'interface de modèle ML respective.

10. Système d'interface utilisateur d'interaction parallèle selon la revendication 8 ou 9, dans lequel les instructions lisibles par ordinateur, lorsqu'elles sont exécutées par l'au moins un processeur, amènent en outre le dispositif informatique à :
recevoir une indication visant à enregistrer la première invite de modèle ML dans une base de données d'invites ;
enregistrer la première invite de modèle ML dans la base de données d'invites, et
récupérer la première invite de modèle ML enregistrée à partir de la base de données d'invites à des fins d'un ou plusieurs parmi : l'édition de la première invite de modèle ML enregistrée, le partage de la première invite de modèle ML enregistrée ou l'ajout de commentaire à la première invite de modèle ML enregistrée.

11. Système d'interface utilisateur d'interaction parallèle selon la revendication 10, dans lequel les instructions lisibles par ordinateur, lorsqu'elles sont exécutées par l'au moins un processeur, amènent en outre le dispositif informatique à :
recevoir des métadonnées concernant la première invite de modèle ML ;
enregistrer les métadonnées dans la base de données d'invites en association avec la première invite de modèle ML ; et
récupérer les métadonnées enregistrées à partir de la base de données d'invites à des fins d'un ou plusieurs parmi : l'édition des métadonnées enregistrées, le partage des métadonnées enregistrées ou l'ajout de commentaire aux métadonnées enregistrées.

12. Système d'interface utilisateur d'interaction parallèle selon l'une quelconque des revendications 8 à 11, dans lequel les instructions lisibles par ordinateur, lorsqu'elles sont exécutées par l'au moins un processeur, amènent en outre le dispositif informatique à :
recevoir une sélection de mode dans la seconde fenêtre d'interface de modèle ML activant un mode « chat »,
dans lequel, pour amener le dispositif informatique à générer la première invite de modèle ML, les instructions lisibles par ordinateur, lorsqu'elles sont exécutées par l'au moins un processeur, amènent le dispositif informatique à générer la première invite de modèle ML en se basant en outre sur un nombre configuré d'interactions précédentes avec le premier modèle ML.

13. Système d'interface utilisateur d'interaction parallèle selon l'une quelconque des revendications 8 à 12, dans lequel les instructions lisibles par ordinateur, lorsqu'elles sont exécutées par l'au moins un processeur, amènent en outre le dispositif informatique à recevoir une sélection de mode dans la première fenêtre d'interface de modèle ML activant un mode « texte ».

14. Système d'interface utilisateur d'interaction parallèle selon l'une quelconque des revendications 8 à 13, dans lequel les instructions lisibles par ordinateur, lorsqu'elles sont exécutées par l'au moins un processeur, amènent en outre le dispositif informatique à :
recevoir une sélection d'une seconde invite de modèle ML enregistrée dans une base de données d'invites ;
éditer la seconde invite de modèle ML ;
fournir, au premier modèle ML, la seconde invite de modèle ML éditée ; et
recevoir, en provenance du modèle ML, une seconde réponse de modèle.

15. Support lisible par ordinateur comprenant des instructions qui, lorsqu'elles sont exécutées par au moins un processeur, amènent l'au moins un processeur à réaliser des opérations comprenant :
la réception de premières données dans une première fenêtre (105) d'interface de modèle d'apprentissage automatique (ML pour « Machine Learning ») d'une interface utilisateur d'interaction parallèle, la première fenêtre d'interface de modèle ML étant associée à un premier identifiant et l'interface utilisateur d'interaction parallèle comprenant la première fenêtre d'interface de modèle ML et une seconde fenêtre (107) d'interface de modèle ML, la première fenêtre d'interface de modèle ML et la seconde fenêtre d'interface de modèle ML étant chacune configurées pour lancer un fil de discussion avec un ou plusieurs modèles ML respectifs ;
la réception, dans un champ de saisie d'invite de la seconde fenêtre d'interface de modèle ML, de secondes données provenant d'un utilisateur, les secondes données incluant le premier identifiant,
en réponse à une présence du premier identifiant, la génération (205) d'une première invite de modèle ML sur la base du traitement d'une pluralité d'entrées parallèles comprenant les premières données et les secondes données ;
la fourniture (207), à un premier modèle ML, de la première invite de modèle ML ;
la réception (211), en provenance du premier modèle ML, d'une première réponse de modèle ; et
l'affichage (213) de la première réponse de modèle dans la seconde fenêtre d'interface de modèle ML.
